# EUROPEAN PATENT SPECIFICATION

(11) **EP 2 482 294 B1**
(45) Date of publication and mention of the grant of the patent: **03.05.2017**
(21) Application number: 10818542.2
(22) Date of filing: 17.09.2010
(51) Int. Cl.: H02J 50/10, H01F 38/14, H01M 10/46, G01V 3/10, H02J 7/00

(54) **NONCONTACT CHARGER SYSTEM**
KONTAKTFREIES LADESYSTEM
SYSTÈME CHARGEUR SANS CONTACT

(30) Priority: 24.09.2009 JP 2009219001
(43) Date of publication of application: 01.08.2012
(73) Proprietor: Panasonic Corporation, Kadoma-shi Osaka 571-8501 (JP)
(72) Inventor: KITAMURA, Hiroyasu, Osaka-shi, Osaka 540-6207 (JP)
(74) Representative: Müller-Boré & Partner Patentanwälte PartG mbB
(86) International application number: PCT/JP2010/005699
(87) International publication number: WO 2011/036863

(56) References cited:
- EP-A2- 2 079 144
- WO-A1-2008/044875
- JP-A- 10 215 530
- JP-A- 11 088 036
- JP-A- 2006 060 909
- JP-A- 2006 060 909
- JP-A- 2006 279 669
- JP-A- 2008 027 015
- JP-A- 2008 289 241
- JP-A- 2009 118 587
- JP-U- 58 080 753
- US-A1- 2008 062 066

## Description

### Technical Field

The present invention relates to a noncontact charger system.

### Background Art

Conventionally, there are noncontact charger systems which charge a charged device such as an electric shaver or an electric toothbrush when the charged device is set to a charger by transmitting power with a predetermined high frequency to the charged device.

An example of a noncontact charger system is described in JP 2009-136048 A. JP 2009-136048 A describes a power transmitting coil and a power receiving coil provided so as to oppose each other, wherein power is transmitted from the power transmitting coil to the power receiving coil due to mutual induction occurring between the power transmitting coil and the power receiving coil.

In addition, recently, power transmitting coils and power receiving coils are sometimes constituted by planar coils in order to reduce installation space of the coils. JP 2006-60909 A describes an example of a noncontact charger system using planar coils.

JP 2006-60909 A describes magnetically coupling a primary coil comprising a planar coil and a secondary coil comprising a planar coil to transmit power from a power transmitting device to a power receiving device.

Meanwhile, from a perspective of preventing unforeseen accidents and the like, a noncontact charger system requires judging whether or not a receiving side set to a transmitting side is legitimate and whether or not a foreign object such as metal is present between the transmitting side and the receiving side prior to starting transmission of power from the transmitting side to the receiving side.

In JP 2006-60909 A, prior to starting actual power transmission from a power transmitting device to a power receiving device, the primary coil and the secondary coil are temporarily magnetically coupled to confirm during the duration of the magnetic coupling that the receiving side is legitimate and to confirm the absence of a foreign object between the power transmitting device and the power receiving device.

In the technique described in JP 2006-60909 A, a combination of a primary coil and a secondary coil is used for purposes other than an original purpose of actually transmitting power from the power transmitting device to the power receiving device, namely, to confirm that the receiving side is legitimate and to confirm that a foreign object is not present between the power transmitting device and the power receiving device.

The technique described in JP 2006-60909 A achieves these purposes by respectively providing the power transmitting device and the power receiving device with a control unit such as a microcomputer that performs processes in accordance with a control program stored in advance.

However, generally, a control unit such as a microcomputer that performs processes in accordance with a control program stored in advance is expensive. Therefore, since a control unit of this type is provided in both the power transmitting device and the power receiving device in JP 2006-60909 A, a manufacturing cost of the noncontact charger system increases significantly.

WO 2008/044875 A1 may also be considered as disclosing background art. WO 2008/044875 A1 discloses a contact-less charger system that includes a primary charging unit having a primary coil and a contact-less receiving module, a secondary charging unit having a secondary coil magnetically coupled to the primary coil and a contact-less sending module, and a battery for receiving a charging voltage from the secondary charging unit. The primary charging unit has means for generating an AC power pulse over common frequency according to application of common AC power, and applying it to the primary coil to induce a high frequency AC power pulse to the secondary coil. The secondary charging unit has means for transmitting charging status in not formation of battery to the primary charging unit using a ceasing time between AC voltage pulses induced by the secondary coil. Thus, power signals between the primary and secondary coils and communication signals between the contact-less sending and receiving modules are not overlapped in aspect of time.

### Summary of Invention

An object of the present invention is to provide a noncontact charger system capable of realizing the detection at low-cost that in a state in which a power transmitting planar coil and a power receiving planar coil which oppose each other to form a predetermined gap to detect the presence of a foreign object such as metal in the gap.

A noncontact charger system according to an aspect of the present invention comprises: a charger including a power transmitting planar coil that transmits high-frequency charging power; and a charged device including a power receiving planar coil which is magnetically coupled to the power transmitting planar coil to receive the high-frequency charging power in a state in which the power receiving planar coil opposes the power transmitting planar coil to form a predetermined gap, wherein the charger includes a primary authentication planar coil which transmits high-frequency authenticating power for authenticating the charged device and which receives a high-frequency authenticating signal for authenticating the charged device, the charged device includes a secondary authentication planar coil which is magnetically coupled to the primary authentication planar coil to receive the high-frequency authenticating power and output the high-frequency authenticating signal generated from the high-frequency authenticating power, to the primary authentication planar coil, and a space between the power transmitting planar coil and the power receiving planar coil overlaps with a space between the primary authentication planar coil and the secondary authentication planar coil.

### Brief Description of the Drawings

[Fig. 1] Fig. 1 is a diagram showing an example of functional modules of a noncontact charger system according to an embodiment of the present invention.
[Fig. 2] Fig. 2 is a diagram showing an example of a specific circuit configuration of a high-frequency authenticating signal generating unit of a charged device.
[Fig. 3] Fig. 3 is a diagram for explaining an example of basic operations of a noncontact charger system according to an embodiment of the present invention.
[Fig. 4] Fig. 4 is a side view showing an example of a configuration of a noncontact charger system according to the present embodiment.
[Fig. 5] Fig. 5 is a diagram schematically showing a first example of respective shapes of a primary authentication coil and a secondary authentication coil.
[Fig. 6] Fig. 6 is a diagram for explaining an outline of a foreign object detection process performed by a control unit.
[Fig. 7] Fig. 7 is a diagram schematically showing a second example of respective shapes of a primary authentication coil and a secondary authentication coil.
[Fig. 8] Fig. 8 is a diagram schematically showing a third example of respective shapes of a primary authentication coil and a secondary authentication coil.
[Fig. 9] Fig. 9 is a diagram schematically showing a fourth example of respective shapes of a primary authentication coil and a secondary authentication coil.
[Fig. 10] Fig. 10 is a diagram schematically showing a fifth example of respective shapes of a primary authentication coil and a secondary authentication coil.
[Fig. 11] Fig. 11 is a diagram schematically showing a sixth example of respective shapes of a primary authentication coil and a secondary authentication coil.
[Fig. 12] Fig. 12 is a diagram schematically showing a seventh example of respective shapes of a primary authentication coil and a secondary authentication coil.
[Fig. 13] Fig. 13 is a diagram schematically showing an eighth example of respective shapes of a primary authentication coil and a secondary authentication coil.
[Fig. 14] Fig. 14 is a diagram schematically showing a ninth example of respective shapes of a primary authentication coil and a secondary authentication coil.
[Fig. 15] Fig. 15 is a diagram schematically showing a tenth example of respective shapes of a primary authentication coil and a secondary authentication coil.
[Fig. 16] Fig. 16 is a diagram for explaining respective positional relationships between the primary authentication coils and the secondary authentication coils and respective positional relationships between power transmitting coils and power receiving coils shown in Figs. 11 to 15.
[Fig. 17] Fig. 17 is a diagram schematically showing an eleventh example of respective shapes of a primary authentication coil and a secondary authentication coil.
[Fig. 18] Fig. 18 is a diagram schematically showing a twelfth example of respective shapes of a primary authentication coil and a secondary authentication coil.
[Fig. 19] Fig. 19 is a diagram schematically showing magnetic flux flows in a case in which winding directions of respective windings of two planar coils respectively constituting the primary authentication coil and the secondary authentication coil shown in Fig. 18 differ from each other, and respective magnetic flux flows of a power transmitting coil and a power receiving coil.
[Fig. 20] Fig. 20 is a diagram schematically showing a thirteenth example of respective shapes of a primary authentication coil and a secondary authentication coil.
[Fig. 21] Fig. 21 is a diagram schematically showing a fourteenth example of respective shapes of a primary authentication coil and a secondary authentication coil.

### Description of Embodiments

In a noncontact charger system, it is conceivable to use a set of coils for power transmission for an original purpose of transmitting power from a power transmitting side to a power receiving side and, in addition, to respectively provide authenticating system coils on the power transmitting side and the power receiving side. An authenticating system coil is a coil used to determine whether or not a combination of a power transmitting side and a power receiving side is legitimate and to determine whether or not a foreign object is present between the power transmitting side and the power receiving side. However, in this case, the following problem may occur.

For example, when a combination of a power transmitting side and a power receiving side is legitimate, there may be a case in which a foreign object is present within a predetermined gap formed by respective power transmitting system coils of the power transmitting side and the power receiving side but the foreign object is not at a position that affects a magnetic coupling of authenticating system coils (for example, on a winding of an authenticating system coil).

In such a case, power ends up being transmitted from the power transmitting side to the power receiving side while overlooking the presence of the foreign object in the gap. As a result, the foreign object in the gap is heated by electromagnetic induction and may inflict a burn to a person or may cause deformation of a housing.

The noncontact charger system according to an embodiment of the present invention described below is a noncontact charger system capable of realizing highly accurate detection of a presence of a foreign object in a gap at low cost.

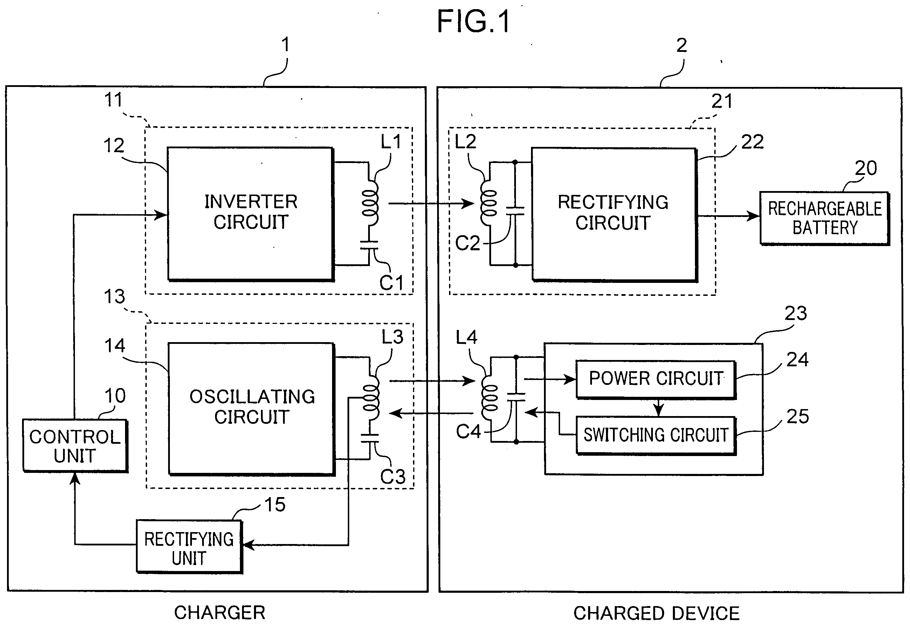

First, basic operations of the noncontact charger system according to an embodiment of the present invention will be described. Fig. 1 is a diagram showing an example of functional modules of the noncontact charger system according to an embodiment of the present invention.

The noncontact charger system shown in Fig. 1 comprises a charger 1 and a charged device 2. The charger 1 comprises a control unit 10, a power transmitting unit 11, a high-frequency authenticating power generating unit 13, and a rectifying unit 15. The control unit 10 is constituted by a microcomputer or the like and integrally controls the charger 1.

The power transmitting unit 11 comprises an inverter circuit 12 to which an LC series resonant circuit comprising a power transmitting coil L1 and a capacitor C1 is connected in parallel. The inverter circuit 12 receives power (for example, DC power or commercial AC power) and generates power with a predetermined high-frequency (for example, 120 kHz). Moreover, since the inverter circuit 12 is a known circuit, a description of a configuration thereof will be omitted.

The LC series resonant circuit comprising the power transmitting coil L1 and the capacitor C1 increases an amplitude of high-frequency power generated by the inverter circuit 12. High-frequency power with its amplitude increased in this manner is transmitted from the power transmitting coil L1 to the charged device 2 as high-frequency charging power for charging the charged device 2.

In the description given hereinafter, the high-frequency power transmitted from the power transmitting coil L1 to the charged device 2 will be referred to as "high-frequency charging power". The power transmitting coil L1 is an example of a power transmitting planar coil that transmits high-frequency charging power.

The high-frequency authenticating power generating unit 13 comprises an oscillating circuit 14 to which an LC series resonant circuit comprising a primary authentication coil L3 and a capacitor C3 is connected in parallel. The oscillating circuit 14 receives power (for example, DC power or commercial AC power) and generates power with a predetermined high-frequency (for example, 3 MHz) that is higher than the frequency of the high-frequency charging power. Moreover, since the oscillating circuit 14 is a known circuit, a description of a configuration thereof will be omitted.

The LC series resonant circuit comprising the primary authentication coil L3 and the capacitor C3 increases an amplitude of high-frequency power generated by the oscillating circuit 14. High-frequency power with its amplitude increased in this manner is transmitted from the primary authentication coil L3 to the charged device 2 as drive power used by the charged device 2 to perform an authentication process.

In the description given hereinafter, the high-frequency power transmitted from the primary authentication coil L3 to the charged device 2 as drive power used by the charged device 2 to perform an authentication process will be referred to as "high-frequency authenticating power". The primary authentication coil L3 is an example of a primary authentication planar coil which transmits high-frequency authenticating power for authenticating the charged device 2 and which receives a high-frequency authenticating signal for authenticating the charged device 2.

The rectifying unit 15 rectifies a high-frequency authenticating signal transmitted from the charged device 2 and outputs the rectified high-frequency authenticating signal to the control unit 10. The control unit 10 receives the rectified high-frequency authenticating signal and authenticates that a combination of the charger 1 and the charged device 2 is legitimate.

The charged device 2 comprises a rechargeable battery 20, a power receiving unit 21, and a high-frequency authenticating signal generating unit 23. The rechargeable battery 20 is constituted by, for example, a lithium ion battery.

The power receiving unit 21 comprises a rectifying circuit 22 to which an LC parallel resonant circuit comprising a power receiving coil L2 and a capacitor C2 is connected in parallel. The power receiving coil L2 is magnetically coupled with the power transmitting coil L1 to receive high-frequency charging power. The power receiving coil L2 is an example of a power receiving planar coil which is magnetically coupled to the power transmitting coil L1 to receive high-frequency charging power in a state in which the power receiving coil L2 opposes the power transmitting coil L1 to form a predetermined gap. The LC parallel resonant circuit comprising the power receiving coil L2 and the capacitor C2 increases an amplitude of high-frequency charging power received by the power receiving coil L2.

The rectifying circuit 22 rectifies high-frequency charging power whose amplitude has been increased by the LC parallel resonant circuit comprising the power receiving coil L2 and the capacitor C2, and supplies the rectified high-frequency charging power as DC power to the rechargeable battery 20. As a result, the rechargeable battery 20 is charged.

The high-frequency authenticating signal generating unit 23 comprises a power circuit 24 and a switching circuit 25. The power circuit 24 is provided in order to generate drive power for the high-frequency authenticating signal generating unit 23, and rectifies and smooths high-frequency authenticating power received by a secondary authentication coil L4 to generate DC power. The secondary authentication coil L4 is an example of a secondary authentication planar coil which is magnetically coupled with the primary authentication coil L3 to receive high-frequency authenticating power and output a high-frequency authenticating signal generated from the high-frequency authenticating power, to the primary authentication coil L3.

The switching circuit 25 is operated by DC power generated by the power circuit 24 to perform a switching process (to be described later) in which high-frequency authenticating power transmitted to the primary authentication coil L3 is changed to a high-frequency authenticating signal.

The LC parallel resonant circuit comprising the secondary authentication coil L4 and the capacitor C4 increases an amplitude of high-frequency authenticating power transmitted to the secondary authentication coil L4. As a result, high-frequency authenticating power with an increased amplitude is outputted to the power circuit 24.

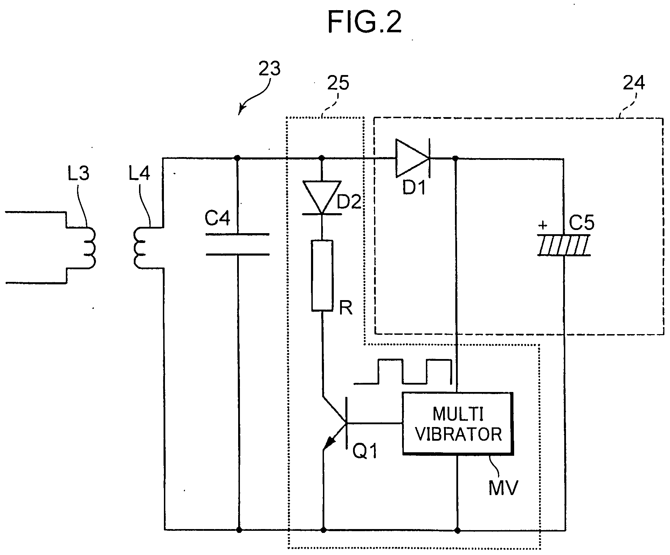

Fig. 2 is a diagram showing an example of a specific circuit configuration of the high-frequency authenticating signal generating unit of the charged device. In the high-frequency authenticating signal generating unit 23, the capacitor C4 is connected in parallel to the secondary authentication coil L4. The secondary authentication coil L4 and the capacitor C4 constitute the LC parallel resonant circuit described above.

In addition, the power circuit 24 and the switching circuit 25 described above are connected to the secondary authentication coil L4. The power circuit 24 supplies DC power to the switching circuit 25 by rectifying high-frequency authenticating power flowing through the secondary authentication coil L4 with a diode D1 to charge an electrolytic capacitor C5 and discharging a charge of the electrolytic capacitor C5.

The switching circuit 25 comprises a series circuit including a rectifying diode D2, a resistive element R (for example, 100 Ω), and a switching element Q1 constituted by a bipolar transistor, and a multivibrator MV that generates a pulse signal with a low frequency (for example, 1 KHz).

In the switching circuit 25 configured as described above, the multivibrator MV outputs a pulse signal generated by the multivibrator MV to the switching element Q1 to turn the switching element Q1 on and off. As a result, the secondary authentication coil L4 is short-circuited by the switching element Q1 in synchronization with an on-period of a pulse signal generated by the multivibrator MV.

In the high-frequency authenticating signal generating unit 23 configured as described above, in a state in which the secondary authentication coil L4 is short-circuited, an impedance of the entire high-frequency authenticating signal generating unit 23 as viewed from the primary authentication coil L3 is substantially only a resistance value of the resistive element R. As a result, an amplitude of high-frequency authenticating power transmitted to the secondary authentication coil L4 increases (high level).

Meanwhile, in a state in which the secondary authentication coil L4 is not short-circuited, an impedance of the entire high-frequency authenticating signal generating unit 23 becomes an impedance that not only includes the resistance value of the resistive element R but also includes an impedance of the secondary authentication coil L4. Therefore, an amplitude of the high-frequency authenticating power transmitted to the secondary authentication coil L4 becomes smaller than an amplitude in a state in which the secondary authentication coil L4 is short-circuited (low level).

As a result, the high-frequency authenticating signal generating unit 23 increases an amplitude of high-frequency authenticating power at the secondary authentication coil L4 during an on-period of a pulse signal generated by the multivibrator MV and reduces the amplitude of the high-frequency authenticating power during an off-period immediately following the on-period.

Consequently, at the secondary authentication coil L4, the high-frequency authenticating signal generating unit 23 generates a high-frequency authenticating signal in which a high-level signal with a large amplitude and a low-level signal with an amplitude that is lower than that of the high-level signal are repeated in synchronization with a pulse signal generated by the multivibrator MV.

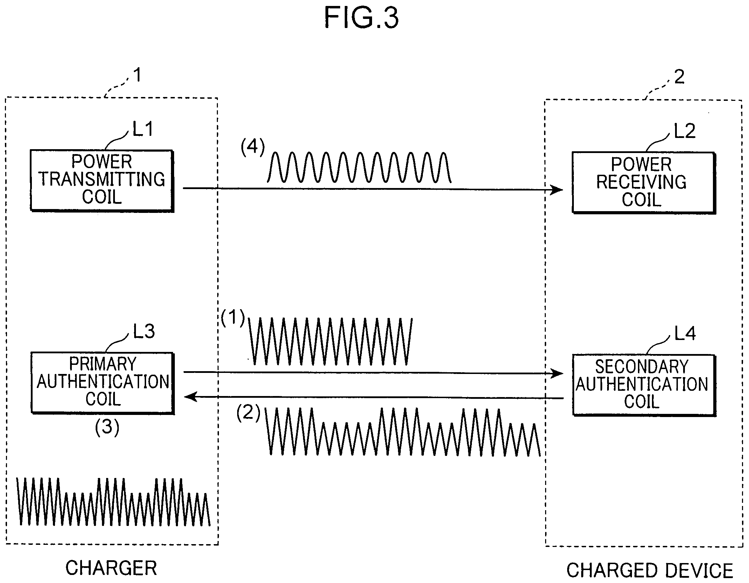

Fig. 3 is a diagram for explaining an example of basic operations of a noncontact charger system according to an embodiment of the present invention.

When the charged device 2 is set to the charger 1, the power transmitting coil L1 and the power receiving coil L2 oppose each other so that a magnetic coupling can be made and, at the same time, the primary authentication coil L3 and the secondary authentication coil L4 oppose each other so that a magnetic coupling can be made.

In this state, the control unit 10 of the charger 1 generates high-frequency power using the oscillating circuit 14. An amplitude of the high-frequency power is increased by the LC series resonant circuit comprising the primary authentication coil L3 and the capacitor C3 and takes the waveform of high-frequency authenticating power.

As a result, since high-frequency authenticating power (power denoted by (1) in Fig. 3) is generated at the primary authentication coil L3, a magnetic flux from the primary authentication coil L3 to the secondary authentication coil L4 is generated. Consequently, the primary authentication coil L3 and the secondary authentication coil L4 become magnetically coupled with each other and the high-frequency authenticating power generated at the primary authentication coil L3 is transmitted to the secondary authentication coil L4 (this concludes an authenticating power transmission process).

When the high-frequency authenticating power is transmitted to the secondary authentication coil L4, through a switching process, the high-frequency authenticating signal generating unit 23 changes the high-frequency authenticating power at the secondary authentication coil L4 into a high-frequency authenticating signal (a signal denoted by (2) in Fig. 3) in which a high-level signal and a low-level signal are repeated.

At this point, since the secondary authentication coil L4 is magnetically coupled with the primary authentication coil L3, a change in a waveform of the high-frequency authenticating power at the secondary authentication coil L4 is transmitted to the primary authentication coil L3.

Subsequently, a waveform of the high-frequency authenticating power at the primary authentication coil L3 assumes a same waveform (a waveform denoted by (3) in Fig. 3) as the high-frequency authenticating power at the secondary authentication coil L4. As a result, the high-frequency authenticating signal at the secondary authentication coil L4 is transmitted to the primary authentication coil L3 (this concludes an authenticating signal transmission process).

At this point, the control unit 10 determines an on/off pattern of the high-frequency authenticating signal to determine whether or not the charged device 2 is legitimate. Accordingly, a determination is made as to whether or not the combination of the charger 1 and the charged device 2 is legitimate.

Moreover, since the primary authentication coil L3 itself has an impedance, an amplitude of the high-frequency authenticating signal at the primary authentication coil L3 is smaller than an amplitude at the secondary authentication coil L4.

In addition, when the control unit 10 judges that the combination of the charger 1 and the charged device 2 is legitimate, the control unit 10 drives the inverter circuit 12 and causes the inverter circuit 12 to transmit high-frequency charging power (power denoted by (4) in Fig. 3) from the power transmitting coil L1 to the power receiving coil L2 (this concludes a charging power transmission process).

The noncontact charger system according to an embodiment of the present invention charges the rechargeable battery 20 by alternately performing an authentication process including an authenticating power transmission process and an authenticating signal transmission process, and a charging power transmission process. For example, a process is repeated in which the charging power transmission process is performed for 1,140 ms and the authentication process is subsequently performed for 60 ms. As a result, a judgment process regarding whether or not a legitimate charged device 2 is set to the charger 1 and a foreign object detection process (to be described later) are regularly performed while the rechargeable battery 20 is being charged.

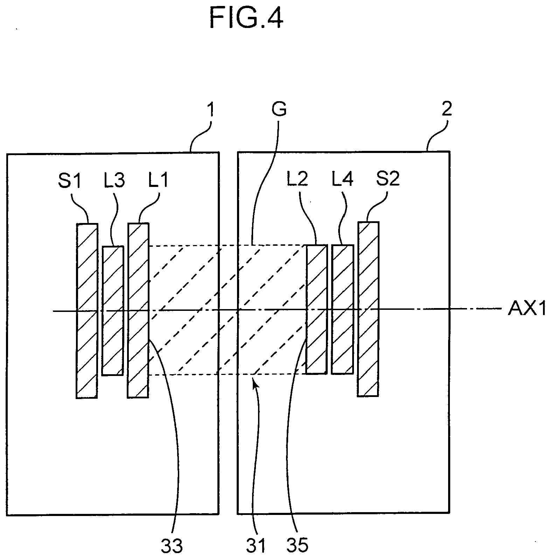

Fig. 4 is a side view showing an example of a configuration of the noncontact charger system according to the present embodiment. In Fig. 4, the power transmitting coil L1 (an example of a power transmitting planar coil), the power receiving coil L2 (an example of a power receiving planar coil), the primary authentication coil L3 (an example of a primary authentication planar coil), and the secondary authentication coil L4 (an example of a secondary authentication planar coil) respectively have a same central axis AX1. In Fig. 4, cross sections of the power transmitting coil L1, the power receiving coil L2, the primary authentication coil L3, and the secondary authentication coil L4 cut along diameters thereof are schematically represented by rectangles.

The charger 1 comprises the power transmitting coil L1 and the charged device 2 comprises the power receiving coil L2. In a state in which the charged device 2 is set to the charger 1, the power transmitting coil L1 constituted by a planar coil and the power receiving coil L2 constituted by a planar coil oppose each other to form a space 31 that has a gap G. The formation of the gap G by the power transmitting coil L1 and the power receiving coil L2 creates a state in which the power transmitting coil L1 and the power receiving coil L2 are able to magnetically couple with each other.

The space 31 between the power transmitting coil L1 and the power receiving planar coil L2 overlaps with a space between the primary authentication coil L3 and the secondary authentication coil L4. This can be rephrased as follows. In the charger 1, in addition to the power transmitting coil L1, the primary authentication coil L3 constituted by a planar coil is provided parallel to a plane that forms the gap G among the power transmitting coil L1. In the primary authentication coil L3, windings are arranged over an entire region in which the power transmitting coil L1 and the power receiving coil L2 oppose each other among the plane that forms the gap G among the power transmitting coil L1. Furthermore, in the charged device 2, in addition to the power receiving coil L2, the secondary authentication coil L4 constituted by a planar coil is provided parallel to a plane that forms the gap G among the power receiving coil L2. In the secondary authentication coil L4, windings are arranged over an entire region in which the power transmitting coil L1 and the power receiving coil L2 oppose each other (in other words, the entire power receiving coil L2) among the plane that forms the gap G among the power receiving coil L2.

The space 31 is a space having one side 33 defined by the power transmitting coil L1 and another side 35 defined by the power receiving coil L2. The one side 33 and the other side 35 have a same surface area. The entire primary authentication coil L3 opposes the entire one side 33. The entire secondary authentication coil L4 opposes the entire other side 35.

The charger 1 is provided with a magnetic sheet S1 for increasing a magnetic flux density in the power transmitting coil L1 and the primary authentication coil L3. The magnetic sheet S1 is provided in order to improve power transmission efficiency from the power transmitting coil L1 and the primary authentication coil L3.

The charged device 2 is provided with a magnetic sheet S2 for increasing a magnetic flux density in the power receiving coil L2 and the secondary authentication coil L4. The magnetic sheet S2 is provided in order to improve power reception efficiency at the power receiving coil L2 and the secondary authentication coil L4.

As shown in Fig. 4, in the present noncontact charger system, the primary authentication coil L3 and the secondary authentication coil L4 respectively have windings arranged over entire regions in which the power transmitting coil L1 and the power receiving coil L2 oppose each other among planes that form the gap G among the power transmitting coil L1 and the power receiving coil L2. In other words, the space between the power transmitting coil L1 and the power receiving planar coil L2 overlaps with the space between the primary authentication coil L3 and the secondary authentication coil L4. Therefore, when a foreign object such as metal is present in the gap G, the magnetic coupling between the primary authentication coil L3 and the secondary authentication coil L4 becomes weaker.

As a result, an amplitude of a voltage value at the primary authentication coil L3 is less likely to be affected by an impedance of the secondary authentication coil L4 and therefore increases. The control unit 10 detects a presence of a foreign object in the gap G by detecting such a change in the amplitude (foreign object detection process).

As described above, since a foreign object can be detected by simply detecting a change in the amplitude of the voltage value at the primary authentication coil L3, an expensive component such as a microcomputer that performs control in accordance with a control program is not required.

Accordingly, in a state in which the power transmitting coil L1 and the power receiving coil L2 oppose each other and form the gap G, a presence of a foreign object such as metal in the gap G can be readily detected without using an expensive component such as a microcomputer. As a result, a low-cost noncontact charger system can be provided.

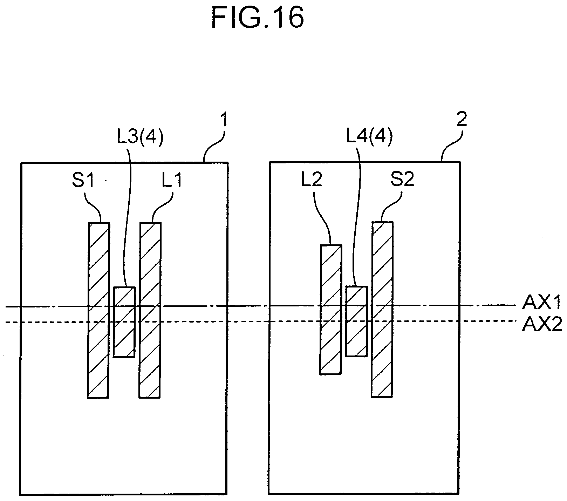

Moreover, as described earlier, in Fig. 4, the power transmitting coil L1, the power receiving coil L2, the primary authentication coil L3, and the secondary authentication coil L4 respectively have the same central axis AX1. However, from a perspective of further enhancing authentication accuracy and foreign object detection accuracy, as shown in Fig. 16, respective central axes AX2 of the primary authentication coil L3 and the secondary authentication coil L4 favorably do not coincide with respective central axes AX1 of the power transmitting coil L1 and the power receiving coil L2.

When the respective central axes AX2 of the primary authentication coil L3 and the secondary authentication coil L4 do not coincide with the respective central axes AX1 of the power transmitting coil L1 and the power receiving coil L2, a mutual induction is less likely to occur between the primary authentication coil L3 and either of the power transmitting coil L1 and the power receiving coil L2.

Therefore, when high-frequency authenticating power is generated at the primary authentication coil L3, the high-frequency authenticating power is more readily transmitted to the secondary authentication coil L4 without being transmitted to either of the power transmitting coil L1 and the power receiving coil L2. As a result, an authentication accuracy of the charged device 2 and a foreign object detection accuracy are improved.

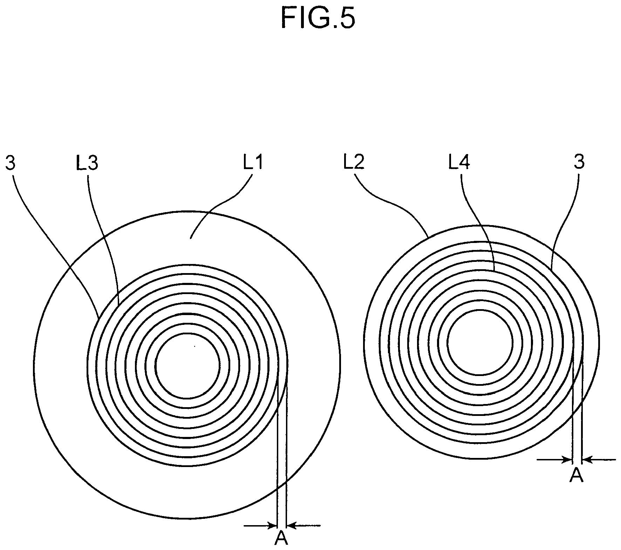

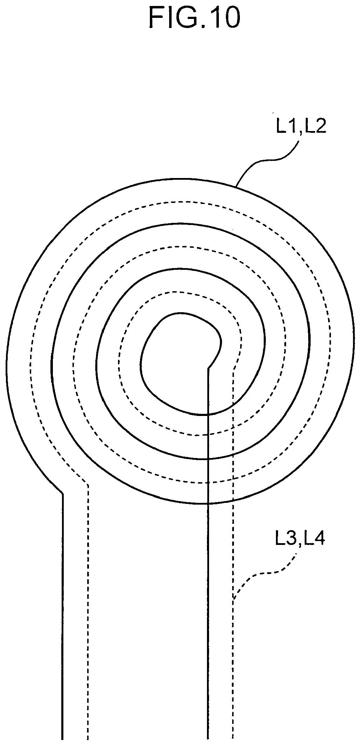

Fig. 5 is a diagram schematically showing an example of respective shapes of the primary authentication coil and the secondary authentication coil. In Fig. 5 and Figs. 7 to 9, while the power transmitting coil L1 and the power receiving coil L2 are depicted by single circles and the primary authentication coil L3 and the secondary authentication coil L4 are depicted by pluralities of concentric windings 3, the power transmitting coil L1, the power receiving coil L2, the primary authentication coil L3, and the secondary authentication coil L4 are actually spiral coils such as those shown in Fig. 10. In Fig. 5, with the secondary authentication coil L4, windings 3 wound in uniform winding intervals A are arranged over an entire plane whose size equals the other side 35 shown in Fig. 4.

With the primary authentication coil L3, windings 3 wound in uniform winding intervals A are arranged over an entire plane whose size equals the one side 33 shown in Fig. 4.

In addition, the number of turns of the respective windings 3 of the primary authentication coil L3 and the secondary authentication coil L4 is set smaller than the number of turns of the respective windings of the power transmitting coil L1 and the power receiving coil L2.

According to such a configuration, the number of turns of the respective windings 3 of the primary authentication coil L3 and the secondary authentication coil L4 is smaller than the number of turns of the respective windings of the power transmitting coil L1 and the power receiving coil L2. As a result, respective inductances of the primary authentication coil L3 and the secondary authentication coil L4 can be set smaller than respective inductances of the power transmitting coil L1 and the power receiving coil L2.

Therefore, in the LC series resonant circuit comprising the primary authentication coil L3 and the capacitor C3 and the LC parallel resonant circuit comprising the secondary authentication coil L4 and the capacitor C4, capacitors with somewhat large electrostatic capacities can be used as the capacitors C3 and C4. As a result, since expensive capacitors having electrostatic capacities of around several pF need not be used, a significant rise in cost can be avoided and LC resonant circuits can be designed with greater ease.

In addition, according to the configuration described above, the respective windings 3 of the primary authentication coil L3 and the secondary authentication coil L4 are wound at uniform winding intervals A over an entire region in which the power transmitting coil L1 and the power receiving coil L2 oppose each other (the one side 33 and the other side 35). Therefore, regardless of where a foreign object present in the gap G formed by the power transmitting coil L1 and the power receiving coil L2 is positioned in respective outward ranges from central sides of the primary authentication coil L3 and the secondary authentication coil L4, the foreign object affects the magnetic coupling between the primary authentication coil L3 and the secondary authentication coil L4. Consequently, a detection accuracy of a foreign object that is present in the gap G is improved.

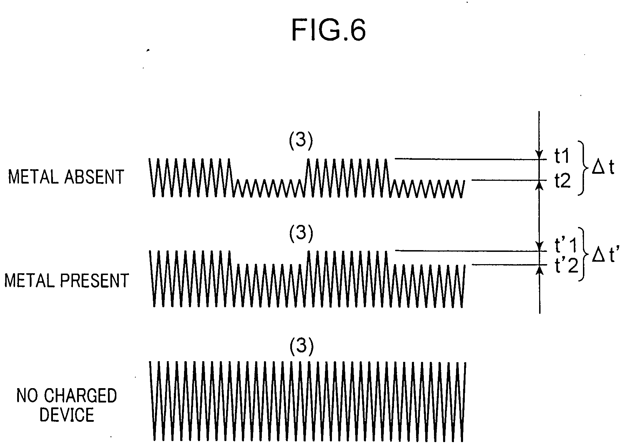

Fig. 6 is a diagram for explaining an outline of the foreign object detection process performed by the control unit 10. Fig. 6 schematically shows respective changes in voltage values of the primary authentication coil L3 in a case in which a foreign object is not present in the gap G (metal absent), a case in which a foreign object is present in the gap G (metal present), and a case in which the charged device 2 is not set to the charger 1 (no charged device).

When the charged device 2 is not set to the charger 1, since the primary authentication coil L3 and the secondary authentication coil L4 are not in a magnetically coupled state, the change in the voltage value of the primary authentication coil L3 is the same as a change in a voltage value of high-frequency authenticating power (power denoted by (1) in Fig. 3).

When the charged device 2 is set to the charger 1, since the primary authentication coil L3 and the secondary authentication coil L4 are in a state in which magnetic coupling is enabled, a high-frequency authenticating signal generated by the charged device 2 is transmitted to the primary authentication coil L3. Accordingly, the change in the voltage value of the primary authentication coil L3 becomes equal to a change in a voltage value of the high-frequency authenticating signal.

However, the presence of a foreign object in the gap G formed by the power transmitting coil L1 and the power receiving coil L2 in a state in which the charged device 2 is set to the charger 1 means that the foreign object is present in a gap formed between the primary authentication coil L3 and the secondary authentication coil L4. The reason therefor is as described earlier.

In this case, an amplitude of the high-frequency authenticating signal at the primary authentication coil L3 increases. A reason therefor will be described below.

When a foreign object is present between the primary authentication coil L3 and the secondary authentication coil L4, since the magnetic coupling between the primary authentication coil L3 and the secondary authentication coil L4 becomes weaker, the primary authentication coil L3 is less likely to be affected by an impedance of the charged device 2. As a result, the amplitude of the primary authentication coil L3 attempts to return to a state in which the charged device 2 is not set.

In this case, in a state in which the charged device 2 is not set, as shown in (1) in Fig. 3, the amplitude of the voltage value of the primary authentication coil L3 assumes an amplitude of high-frequency authenticating power having a greater amplitude than a high-level signal of a high-frequency authenticating signal.

As described earlier, a low-level signal (a signal when amplitude is small) of the high-frequency authenticating signal at the primary authentication coil L3 is a signal affected by an impedance including the secondary authentication coil L4 and a resistance value of the resistive element R. As described earlier, a high-level signal (a signal when amplitude is large) of the high-frequency authenticating signal at the primary authentication coil L3 is a signal only affected by the resistance value of the resistive element R that is smaller than the impedance of the secondary authentication coil L4.

Consequently, the following state is created when a foreign object is present in the gap G formed by the power transmitting coil L1 and the power receiving coil L2 and the magnetic coupling between the primary authentication coil L3 and the secondary authentication coil L4 becomes weaker. An amount of change of the amplitude of the low-level signal of the high-frequency authenticating signal at the primary authentication coil L3 which had previously been significantly affected by the impedance of the charged device 2 becomes greater than an amount of change of the amplitude of the high-level signal of the high-frequency authenticating signal at the primary authentication coil L3 which had not been affected as much by the impedance of the charged device 2.

Therefore, as shown in Fig. 6, the amplitude of the high-level signal at the primary authentication coil L3 increases by (t'1 t1). Meanwhile, the amplitude of the low-level signal at the primary authentication coil L3 increases by (t '2 - t2) that is a smaller amount of change than (t'1 - t1).

As a result, when a foreign object is present in the gap G formed by the power transmitting coil L1 and the power receiving coil L2 in a state in which the charged device 2 is set to the charger 1, a difference in amplitudes between the high-level signal and the low-level signal of the high-frequency authenticating signal at the primary authentication coil L3 changes from Δt expressed as t1 - t2 to At' which is expressed as t'1 t'2 and which has a smaller value than Δt. The control unit 10 detects a foreign object by detecting a change in the difference in amplitudes between the high-level signal and the low-level signal at the primary authentication coil L3 from Δt to Δt'.

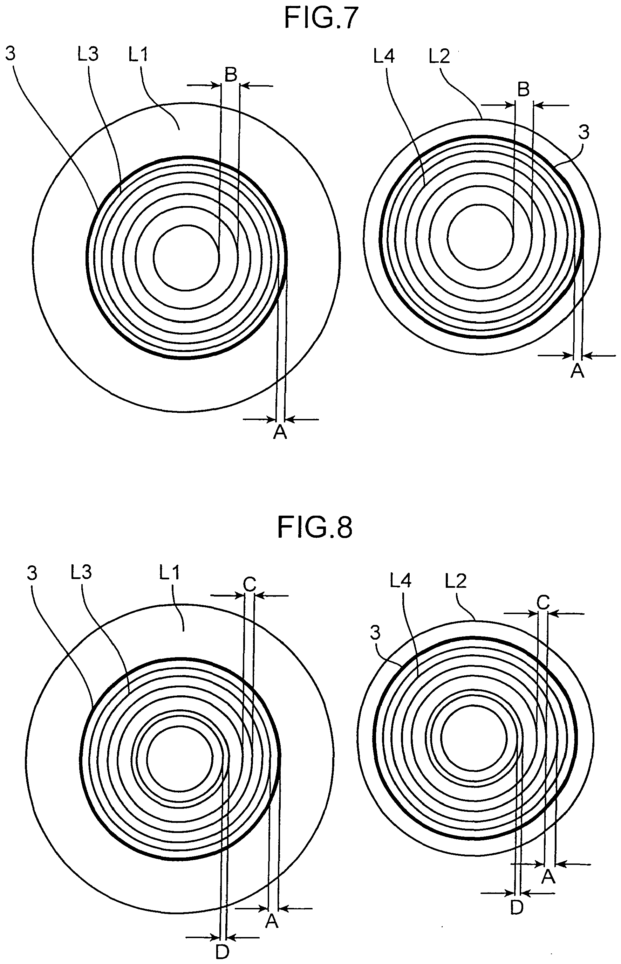

Hereinafter, various respective configuration examples of the primary authentication coil L3 and the secondary authentication coil L4 will be illustrated in Figs. 7 to 15 and Fig. 17.

Moreover, planar coils that respectively form the primary authentication coil L3 and the secondary authentication coil L4 shown in Fig. 5 and Figs. 7 to 10 are arranged to have circular shapes. The shapes of the planar coils are not limited to a circle and, for example, may instead be a square. A square planar coil can further improve detection accuracy of a foreign object compared to a circular planar coil.

When a configuration is adopted in which surface areas of the respective planar coils of the primary authentication coil L3 and the secondary authentication coil L4 approximate surface areas of the planar coils respectively constituting the power transmitting coil L1 and the power receiving coil L2, the following description applies. When the respective planar coils of the primary authentication coil L3 and the secondary authentication coil L4 have square shapes, surface areas of the planar coils are greater than in a case in which the planar coils have circular shapes. Therefore, since surface areas of the respective planar coils of the primary authentication coil L3 and the secondary authentication coil L4 is greater when the planar coils have square shapes compared to a case in which the planar coils have circular shapes, a range in which a magnetic flux is generated increases.

As a result, since a range in which the magnetic coupling between the primary authentication coil L3 and the secondary authentication coil L4 is created becomes wider, a detection accuracy of a foreign object is improved.

When the respective shapes of the primary authentication coil L3 and the secondary authentication coil L4 are squares, a range in which a magnetic flux is generated between the primary authentication coil L3 and the secondary authentication coil L4 becomes wider compared to a case in which the respective shapes are circular. Consequently, since a range in which the magnetic coupling between the primary authentication coil L3 and the secondary authentication coil L4 is created becomes wider, a detection accuracy of a foreign object is further improved.

In the primary authentication coil L3 and the secondary authentication coil L4 shown in Fig. 7, windings 3 having winding intervals that become smaller outward from centers of the planar coils (the primary authentication coil L3 and the secondary authentication coil L4) are arranged over an entire region in which the power transmitting coil L1 and the power receiving coil L2 oppose each other. In each of the primary authentication coil L3 and the secondary authentication coil L4 of this type, the winding intervals of the winding 3 become sequentially smaller from a maximum winding interval B to a minimum winding interval A the further toward an outer edge portion from a central portion.

According to this configuration, since the winding intervals become smaller outward from the respective centers of the primary authentication coil L3 and the secondary authentication coil L4, respective inductances of the primary authentication coil L3 and the secondary authentication coil L4 are more liable to change due to a foreign object positioned near the respective outer edge portions of the primary authentication coil L3 and the secondary authentication coil L4.

As a result, a foreign object positioned near the respective outer edge portions of the primary authentication coil L3 and the secondary authentication coil L4 can be detected with high accuracy.

In the primary authentication coil L3 and the secondary authentication coil L4 shown in Fig. 8, windings 3 having winding intervals that become smaller toward the centers of the planar coils (the primary authentication coil L3 and the secondary authentication coil L4) and also outward are arranged over an entire region in which the power transmitting coil L1 and the power receiving coil L2 oppose each other.

When respectively manufacturing the primary authentication coil L3 and the secondary authentication coil L4, if the windings 3 are wound around bobbins, central portions of the bobbins become voids. As a result, when a foreign object is positioned near a central portion, since respective inductances of the primary authentication coil L3 and the secondary authentication coil L4 are less liable to change, it is difficult to detect a foreign object positioned near a central portion.

According to this configuration, the winding intervals of the respective windings 3 of the primary authentication coil L3 and the secondary authentication coil L4 become sequentially smaller from a winding interval C to a winding interval D the further toward central portions of the primary authentication coil L3 and the secondary authentication coil L4 from midway portions between the central portions and outer edge portions of the primary authentication coil L3 and the secondary authentication coil L4.

Therefore, respective inductances of the primary authentication coil L3 and the secondary authentication coil L4 are more liable to change due to a foreign object positioned near the respective central portions of the primary authentication coil L3 and the secondary authentication coil L4.

As a result, when the windings 3 of the primary authentication coil L3 and the secondary authentication coil L4 have voids at their central portions, a foreign object positioned near the central portions can be detected with high accuracy.

In addition, according to this configuration, the winding intervals become sequentially smaller from a winding interval C to a winding interval A the further toward the outer edge portions of the primary authentication coil L3 and the secondary authentication coil L4 from midway portions between the respective central portions and outer edge portions of the primary authentication coil L3 and the secondary authentication coil L4. As a result, a foreign object positioned near the respective outer edge portions of the primary authentication coil L3 and the secondary authentication coil L4 can be detected with high accuracy. The reason therefor is as described earlier.

Furthermore, the primary authentication coil L3 and the secondary authentication coil L4 shown in Fig. 8 are respectively constituted by planar coils having a same surface area and a same shape. Therefore, a presence of a foreign object in a space from either of the primary authentication coil L3 and the secondary authentication coil L4 to the other authentication coil L4 or L3 in a state in which the primary authentication coil L3 and the secondary authentication coil L4 oppose each other means that the foreign object is present in a gap between the primary authentication coil L3 and the secondary authentication coil L4. Consequently, the foreign object is present within a magnetic flux between the primary authentication coil L3 and the secondary authentication coil L4.

As a result, the presence of a foreign object in a space from either of the primary authentication coil L3 and the secondary authentication coil L4 to the other authentication coil L4 or L3 in a state in which the primary authentication coil L3 and the secondary authentication coil L4 oppose each other affects the magnetic coupling between the primary authentication coil L3 and the secondary authentication coil L4. Therefore, a foreign object that is present between the primary authentication coil L3 and the secondary authentication coil L4 can be detected with high accuracy.

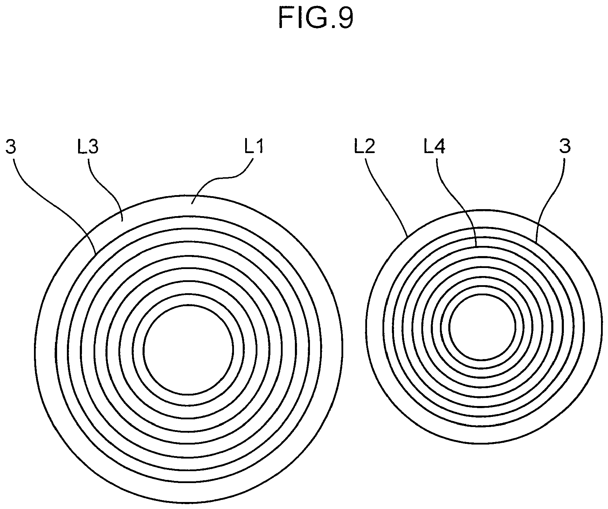

In the primary authentication coil L3 and the secondary authentication coil L4 shown in Fig. 9, the primary authentication coil L3 is constituted by a planar coil which has a same shape as a planar coil constituting the secondary authentication coil L4, but with a larger surface area than the planar coil.

According to this configuration, since the primary authentication coil L3 has the same shape as the secondary authentication coil L4 but has a larger surface area than the surface area of the secondary authentication coil L4, even if a central axis of the secondary authentication coil L4 is slightly offset from a central axis of the primary authentication coil L3, a foreign object that is present between the power transmitting coil L1 and the power receiving coil L2 can be detected with high accuracy.

In the primary authentication coil L3 and the secondary authentication coil L4 shown in Fig. 10, the primary authentication coil L3 is provided on a same plane as the power transmitting coil L1, and the secondary authentication coil L4 is provided on a same plane as the power receiving coil L2.

The primary authentication coil L3 and the power transmitting coil L1 shaped in this manner can be manufactured by, for example, sequentially winding a winding constituting the primary authentication coil L3 and a winding constituting the power transmitting coil L1 in a right-handed winding direction from outside toward a central portion on a substrate to which an adhesive has been applied.

The secondary authentication coil L4 and the power receiving coil L2 can be manufactured by, for example, sequentially winding a winding constituting the secondary authentication coil L4 and a winding constituting the power receiving coil L2 in a right-handed winding direction from outside toward a central portion on a substrate to which an adhesive has been applied.

According to this configuration, the primary authentication coil L3 is provided on the same plane as the power transmitting coil L1 and the secondary authentication coil L4 is provided on the same plane as the power receiving coil L2. Therefore, compared to a case in which the primary authentication coil L3 is provided so as to oppose the power transmitting coil L1 and the secondary authentication coil L4 is provided so as to oppose the power receiving coil L2, the number of coil layers can be reduced. As a result, thinning of the charger 1 and the charged device 2 can be achieved.

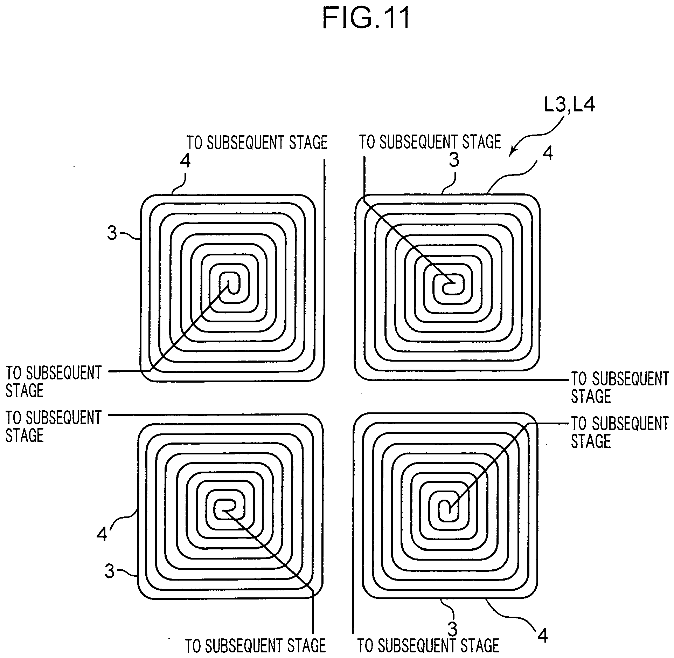

The primary authentication coils L3 and the secondary authentication coils L4 shown in Figs. 11 to 15 are respectively constituted by a plurality of square planar coils 4. As shown, since the primary authentication coil L3 and the secondary authentication coil L4 shown in Figs. 11 to 15 are respectively constituted by a plurality of square planar coils 4, even if the plurality of planar coils 4 are respectively clustered on planes of the primary authentication coil L3 and the secondary authentication coil L4, gaps are not created. Accordingly, an authentication accuracy of the charged device 2 and a foreign object detection accuracy are improved.

Windings 3 wound in a same winding direction are arranged in the plurality of planar coils 4 respectively constituting the primary authentication coil L3 and the secondary authentication coil L4 shown in Fig. 11. In Fig. 11, the windings 3 are in a right-handed winding direction from outside toward a central portion.

In addition, each of the plurality of planar coils 4 of the secondary authentication coil L4 is provided at a position corresponding to each of the plurality of planar coils 4 of the primary authentication coil L3. In other words, in a state in which the primary authentication coil L3 and the secondary authentication coil L4 oppose each other, each of the plurality of planar coils 4 of the primary authentication coil L3 opposes the planar coil 4 corresponding to the planar coil 4 of the primary authentication coil L3 among the plurality of planar coils 4 of the secondary authentication coil L4.

According to this configuration, since the windings 3 of the plurality of planar coils 4 respectively constituting the primary authentication coil L3 and the secondary authentication coil L4 are arranged in a same winding direction, magnetic fluxes are respectively generated in the primary authentication coil L3 and the secondary authentication coil L4 in a same direction.

In addition, since each of the plurality of planar coils 4 of the secondary authentication coil L4 is provided at a position corresponding to each of the plurality of planar coils 4 of the primary authentication coil L3, each of the plurality of planar coils 4 of the primary authentication coil L3 magnetically couple with the corresponding planar coil 4 of the secondary authentication coil L4.

Therefore, in the space between the primary authentication coil L3 and the secondary authentication coil L4, a space with a high magnetic flux density is widely distributed in correspondence with the number of the respective planar coils 4 of the primary authentication coil L3 and the secondary authentication coil L4.

If a space with a high magnetic flux density is widely distributed in the space between the primary authentication coil L3 and the secondary authentication coil L4, a foreign object that is present in the space is more likely to affect the magnetic coupling between the primary authentication coil L3 and the secondary authentication coil L4.

As a result, a space in which a foreign object can be detected with high accuracy becomes widely distributed in the space between the primary authentication coil L3 and the secondary authentication coil L4, and a detection accuracy of a foreign object that is present in the space between the primary authentication coil L3 and the secondary authentication coil L4 is improved.

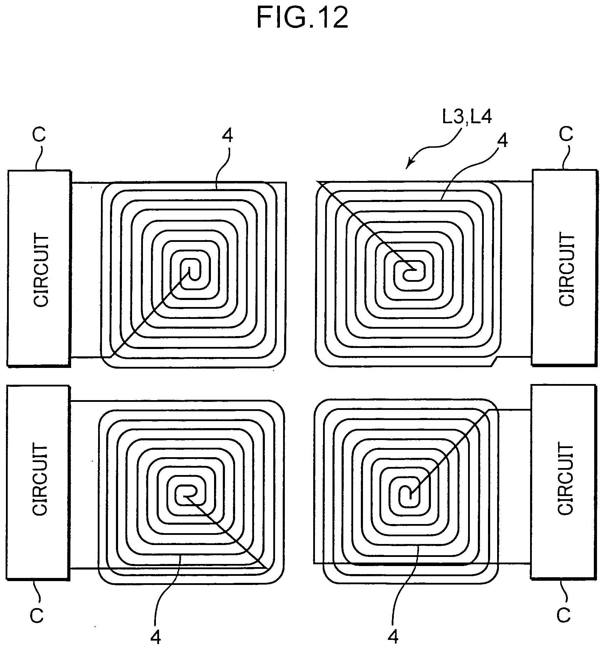

The primary authentication coil L3 and the secondary authentication coil L4 shown in Fig. 12 respectively have the same configurations as the primary authentication coil L3 and the secondary authentication coil L4 shown in Fig. 11.

In the primary authentication coil L3 and the secondary authentication coil L4 shown in Fig. 12, circuits C (to be described later) are respectively connected to the plurality of planar coils 4. For example, the high-frequency authenticating power generating units 13 which authenticate the charged device 2 based on a high-frequency authenticating signal received at each of the plurality of planar coils 4 constituting the primary authentication coil L3 are connected as the circuits C to each planar coil 4.

For example, the high-frequency authenticating signal generating units 23 which generate a high-frequency authenticating signal from high-frequency authenticating power are connected as the circuits C to each of the plurality of planar coils 4 constituting the secondary authentication coil L4.

According to this configuration, the high-frequency authenticating power generating units 13 which authenticate the charged device 2 are provided in correspondence with each of the plurality of planar coils 4 constituting the primary authentication coil L3, and the high-frequency authenticating signal generating units 23 which generate a high-frequency authenticating signal are provided in correspondence with each of the plurality of planar coils 4 constituting the secondary authentication coil L4.

As a result, authentication of the charged device 2 and detection of a foreign object are performed for each combination of the plurality of planar coils 4 of the primary authentication coil L3 and the corresponding planar coils 4 of the secondary authentication coil L4. Accordingly, an authentication accuracy of the charged device 2 and a foreign object detection accuracy are improved.

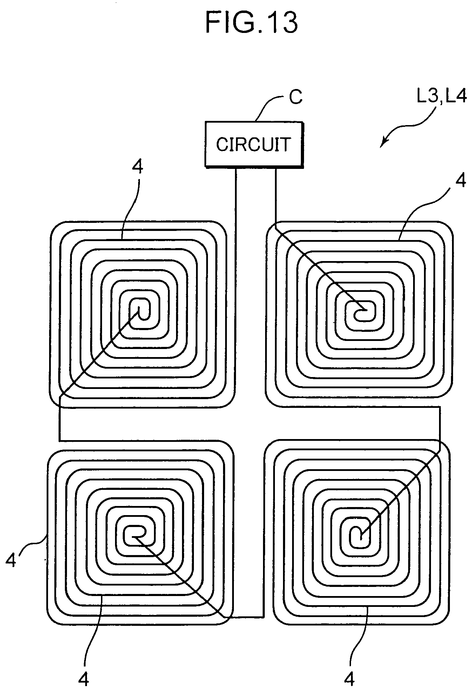

In the primary authentication coil L3 and the secondary authentication coil L4 shown in Fig. 13, the plurality of planar coils 4 respectively constituting the primary authentication coil L3 and the secondary authentication coil L4 shown in Fig. 11 is respectively connected in series.

According to this configuration, since the plurality of the planar coils 4 is respectively connected in series to respectively constitute the primary authentication coil L3 and the secondary authentication coil L4, overall numbers of turns of the respective windings of the primary authentication coil L3 and the secondary authentication coil L4 increase. As a result, respective overall inductances of the primary authentication coil L3 and the secondary authentication coil L4 are improved. Consequently, since the magnetic coupling between the primary authentication coil L3 and the secondary authentication coil L4 becomes stronger, an authentication accuracy of a charged device and a detection accuracy of a foreign object are improved.

Furthermore, since the plurality of the planar coils 4 is respectively connected in series to respectively constitute the primary authentication coil and the secondary authentication coil, only one circuit C needs to be respectively connected to the entire primary authentication coil L3 and the entire secondary authentication coil L4. Accordingly, cost reduction can be achieved.

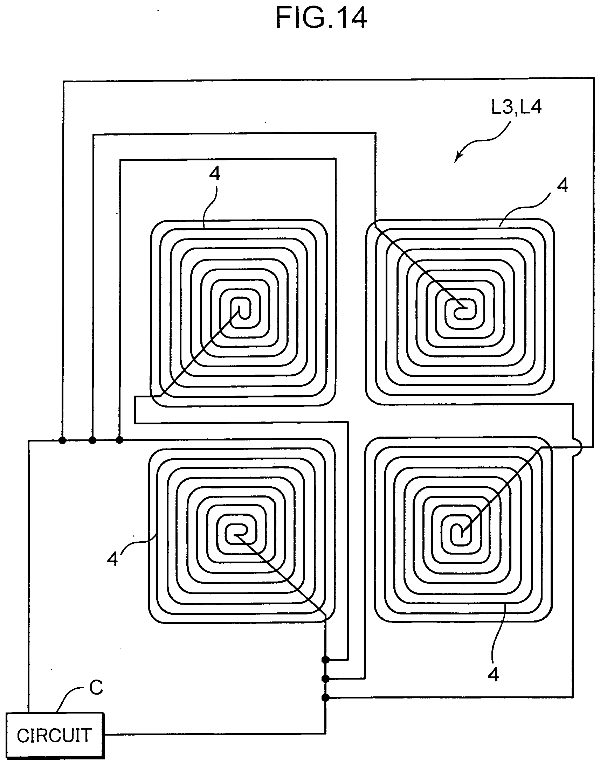

In the primary authentication coil L3 and the secondary authentication coil L4 shown in Fig. 14, the plurality of planar coils 4 respectively constituting the primary authentication coil L3 and the secondary authentication coil L4 shown in Fig. 11 is respectively connected in parallel.

According to this configuration, since each of the plurality of the planar coils 4 is respectively connected in parallel to respectively constitute the primary authentication coil L3 and the secondary authentication coil L4, only one circuit C needs to be respectively connected to the entire primary authentication coil L3 and the entire secondary authentication coil L4. Accordingly, cost reduction can be achieved.

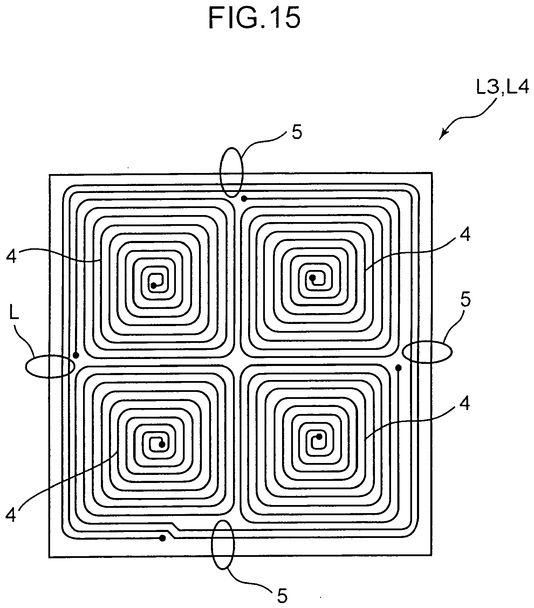

The primary authentication coil L3 and the secondary authentication coil L4 shown in Fig. 15 respectively include the plurality of planar coils 4 respectively constituting the primary authentication coil L3 and the secondary authentication coil L4 shown in Fig. 11, and windings 5 which enclose the planar coils 4 and which are wound in a same winding direction as that of each of the plurality of planar coils 4.

According to this configuration, since the windings 5 which enclose the plurality of planar coils 4 and which are wound in a same winding direction as that of each of the plurality of planar coils 4 are provided, a magnetic flux from the windings 5 that enclose the plurality of planar coils 4 reaches positions not reached by the magnetic fluxes of the plurality of planar coils 4.

As a result, since the magnetic coupling between the primary authentication coil L3 and the secondary authentication coil L4 becomes stronger, an authentication accuracy of the charged device 2 and a detection accuracy of a foreign object are improved.

Fig. 16 is a diagram for explaining respective positional relationships between the primary authentication coils L3 and the secondary authentication coils L4 and respective positional relationships between the power transmitting coils L1 and the power receiving coils L2 shown in Figs. 11 to 15.

As shown in Fig. 16, in a state in which the charged device 2 is set to the charger 1, each of the plurality of planar coils 4 constituting the primary authentication coil L3 and each corresponding planar coil 4 of the secondary authentication coil L4 oppose each other while sharing a same central axis AX2.

Meanwhile, the power transmitting coil L1 and the power receiving coil L2 oppose each other while sharing a same central axis AX1. The central axis AX1 is an axis that differs from the central axis AX2.

As described above, since the central axis AX2 of the plurality of planar coils 4 respectively constituting the primary authentication coil L3 and the secondary authentication coil L4 do not coincide with the respective central axes AX1 of the power transmitting coil L1 and the power receiving coil L2, a strength of the magnetic coupling between the planar coil 4 of the primary authentication coil L3 and the corresponding planar coil 4 of the secondary authentication coil L4 is less likely to be affected by the magnetic flux between the power transmitting coil L1 and the power receiving coil L2. As a result, an authentication accuracy of the charged device 2 and a foreign object detection accuracy are improved.

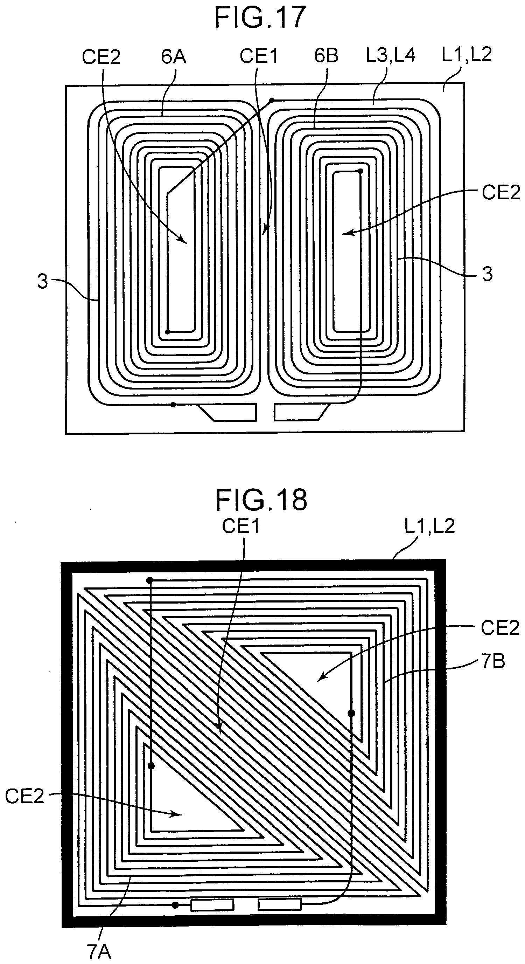

Figs. 17 and 18 show respective configuration examples of the primary authentication coil L3 and the secondary authentication coil L4 which enable each of the plurality of planar coils 4 constituting the primary authentication coil L3 and each corresponding planar coil 4 of the secondary authentication coil L4 to oppose each other while sharing the central axis AX2 that differs from the respective central axes AX1 of the power transmitting coil L1 and the power receiving coil L2.

The primary authentication coil L3 and the secondary authentication coil L4 shown in Fig. 17 respectively comprise two rectangular planar coils 6A and 6B having central portions CE2. In addition, in each of the planar coils 6A and 6B, windings 3 are wound in a right-handed winding direction from outside toward the central portions. Furthermore, the planar coil 6A and the planar coil 6B are connected in series.

In the primary authentication coil L3 and the secondary authentication coil L4 configured as described above, respective central axes AX2 of the planar coils 6A and 6B are axes which pass through the central portions CE2 and which extend in directions perpendicular to a plane of paper. Meanwhile, respective central axes AX1 of the power transmitting coil L1 and the power receiving coil L2 are axes which pass through central portions CE1 thereof and which extend in directions perpendicular to the plane of paper.

In addition, the primary authentication coil L3 and the secondary authentication coil L4 shown in Fig. 18 respectively comprise two triangular planar coils 7A and 7B having central portions CE2. Furthermore, in each of the planar coils 7A and 7B, windings 3 are wound in a right-handed winding direction from outside toward the central portions. Moreover, the planar coil 7A and the planar coil 7B are connected in series.

In the primary authentication coil L3 and the secondary authentication coil L4 configured as described above, respective central axes AX2 of the planar coils 7A and 7B are axes which pass through the central portions CE2 and which extend in directions perpendicular to a plane of paper. Meanwhile, respective central axes AX1 of the power transmitting coil L1 and the power receiving coil L2 are axes which pass through central portions CE1 thereof and which extend in directions perpendicular to the plane of paper.

The planar coils 6A and 6B and the planar coils 7A and 7B which respectively constitute the primary authentication coil L3 and the secondary authentication coil L4 described above have windings 3 that are wound in the same winding direction. However, from the perspective of improving authentication accuracy of the charged device 2 and foreign object detection accuracy, windings 3 wound in winding directions that differ from each other may be provided.

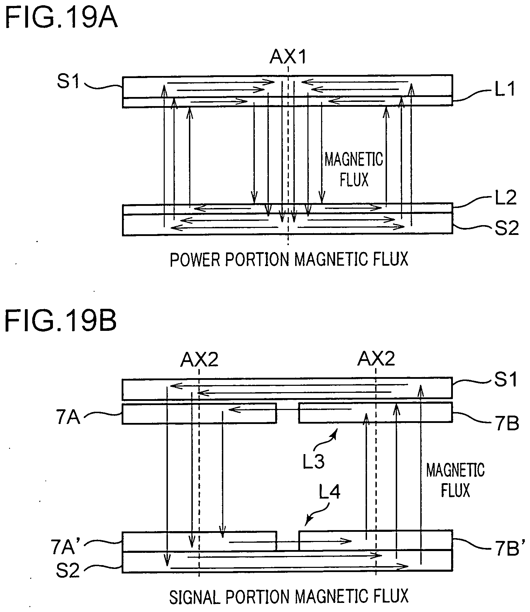

Figs. 19A and 19B are diagrams schematically showing a magnetic flux flow in a case in which respective windings 3 of two planar coils 4 respectively comprising the primary authentication coil L3 and the secondary authentication coil L4 shown in Fig. 18 have different winding directions, and respective magnetic flux flows of the power transmitting coil L1 and the power receiving coil L2. Fig. 19A schematically shows a magnetic flux flow at the power transmitting coil L1 and the power receiving coil L2. Fig. 19B schematically shows a magnetic flux flow at the primary authentication coil L3 and the secondary authentication coil L4.

In the primary authentication coil L3 and the secondary authentication coil L4, since the winding directions of the windings 3 of the two planar coils 7A and 7B are in different directions, as shown in Fig. 19(B), a magnetic flux is generated from the planar coil 7A of the primary authentication coil L3 to a planar coil 7A' of the secondary authentication coil L4 along a central axis AX2 of the planar coils 7A and 7A'.

Meanwhile, a magnetic flux is generated from a planar coil 7B' of the secondary authentication coil L4 to a planar coil 7B of the primary authentication coil L3 along a central axis AX2 of the planar coils 7B and 7B'.

As a result, a magnetic flux loop is formed from the planar coil 7A of the primary authentication coil L3 on a left hand side of a plane of paper and reaching the corresponding planar coil 7A' of the secondary authentication coil L4 on the left hand side of the plane of paper, and from the planar coil 7B' of the secondary authentication coil L4 on the right hand side of the plane of paper and reaching the corresponding planar coil 7B of the primary authentication coil L3 on the right hand side of the plane of paper.

Meanwhile, at the power transmitting coil L1 and the power receiving coil L2, as shown in Fig. 19(A), a magnetic flux with a high magnetic flux density from the power transmitting coil L1 and reaching the power receiving coil L2 is generated along central axes of the power transmitting coil L1 and the power receiving coil L2. In addition, the magnetic flux having reached the power receiving coil L2 then reaches the power transmitting coil L1 in a state in which a magnetic flux density thereof is lowered.

As is apparent from Figs. 19A and 19B, the respective central axes AX2 of the two planar coils 7A and 7B of the primary authentication coil L3 and the secondary authentication coil L4 do not coincide with the respective central axes AX1 of the power transmitting coil L1 and the power receiving coil L2. As a result, the magnetic flux loop between the primary authentication coil L3 and the secondary authentication coil L4 does not overlap with a path of the magnetic flux with a high magnetic flux density which originates at a central portion of the power transmitting coil L1 and reaches a central portion of the power receiving coil L2 along the central axes AX1 of the power transmitting coil L1 and the power receiving coil L2.

Accordingly, since the magnetic flux between the primary authentication coil L3 and the secondary authentication coil L4 is less likely to be interfered by the magnetic flux between the power transmitting coil L1 and the power receiving coil L2, a magnetic coupling between the primary authentication coil L3 and the secondary authentication coil L4 is less likely to be affected by the power transmitting coil L1 and the power receiving coil L2. As a result, an authentication accuracy of the charged device 2 and a foreign object detection accuracy are improved.

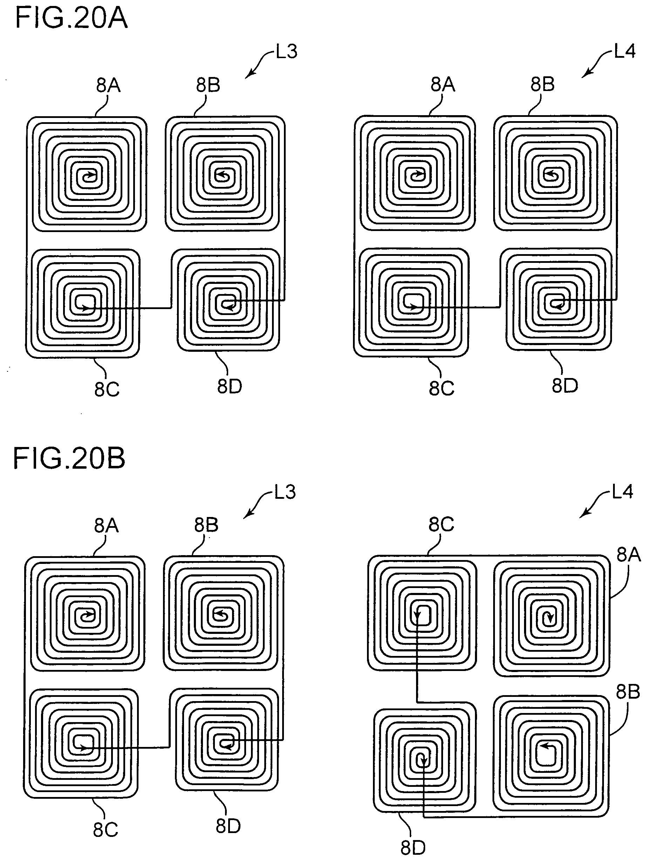

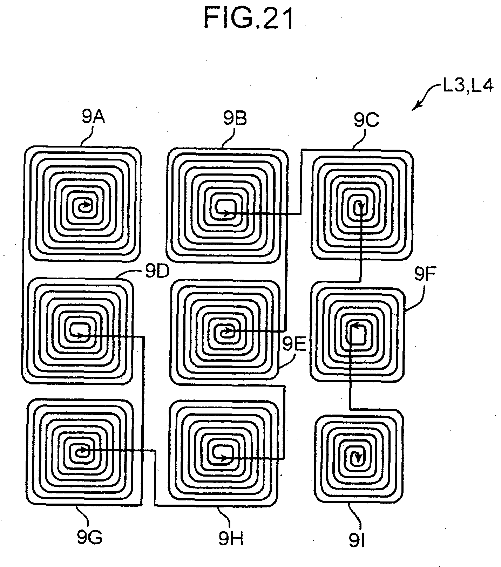

Figs. 20A, 20B and 21 show configurations which may be further adopted as the primary authentication coil L3 and the secondary authentication coil L4.

In the primary authentication coils L3 and the secondary authentication coils L4 shown in Figs. 20A, 20B and 21, windings of planar coils aligned on diagonal lines have a same winding direction. In addition, windings of any two planar coils that are vertically and horizontally adjacent to each other have different winding directions.

According to such a configuration, due to the presence of respective planar coils which are vertically and horizontally adjacent to each other of the primary authentication coil L3 and the secondary authentication coil L4, magnetic flux loops that differ from the magnetic flux loop of the power transmitting coil L1 and the power receiving coil L2 can be formed in a greater number in a state in which the primary authentication coil L3 and the secondary authentication coil L4 oppose each other.

Therefore, a magnetic coupling between the primary authentication coil L3 and the secondary authentication coil L4 is less likely to be affected by both the power transmitting coil L1 and the power receiving coil L2. As a result, an authentication accuracy of the charged device 2 and a foreign object detection accuracy are improved.

Furthermore, the primary authentication coils L3 and the secondary authentication coils L4 shown in Figs. 20A, 20B and 21 have the following advantages. These advantages will now be described.

With the plurality of planar coils 8A to 8D respectively constituting the primary authentication coil L3 and the secondary authentication coil L4 shown in Figs. 20A and 20B, winding directions of the respective windings 3 of the planar coils 8A and 8D which are aligned on a diagonal line are set to a right-handed winding direction (a right-handed winding direction from outside toward a center; the same applies hereinafter). Meanwhile, winding directions of the respective windings 3 of the planar coils 8B and 8C which are aligned on a diagonal line are set to a left-handed winding direction (a left-handed winding direction from outside toward a center; the same applies hereinafter).

As a result, winding directions of respective windings 3 of the horizontally adjacent planar coils 8A and 8B differ from each other. In addition, winding directions of respective windings 3 of the horizontally adjacent planar coils 8C and 8D differ from each other. Furthermore, winding directions of respective windings 3 of the vertically adjacent planar coils 8A and 8C differ from each other. Moreover, winding directions of respective windings 3 of the vertically adjacent planar coils 8B and 8D differ from each other.

According to this configuration, even if the primary authentication coil L3 is at a relatively-rotated position with respect to the secondary authentication coil L4, a strength of the magnetic coupling between the primary authentication coil L3 and the secondary authentication coil L4 substantially remains the same.

This is because even if both of or one of the respective planar coils 8A to 8D of the primary authentication coil L3 and the secondary authentication coil L4 are rotated, a surface area of a region in which the respective planar coils 8A to 8D of the coils L3 and L4 and the respective planar coils 8A to 8D of the other coils L3 and L4 oppose each other substantially remains the same.

In particular, when the primary authentication coil L3 and the secondary authentication coil L4 are respectively rotated clockwise by 90 degrees or 180 degrees or counterclockwise by 90 degrees or 180 degrees, an oppositional state of the winding 3 of the primary authentication coil L3 and the winding 3 of the secondary authentication coil L4 is unchanged from a state in which both the primary authentication coil L3 and the secondary authentication coil L4 are not rotated. As a result, the strength of the magnetic coupling between the primary authentication coil L3 and the secondary authentication coil L4 is unchanged.

For example, let us assume that an oppositional relationship between the primary authentication coil L3 and the secondary authentication coil L4 in a state in which the secondary authentication coil L4 is not rotated is an oppositional relationship shown in Fig. 20(A). If the secondary authentication coil L4 opposes the primary authentication coil L3 while being rotated clockwise by 90 degrees, the oppositional relationship between the primary authentication coil L3 and the secondary authentication coil L4 becomes as shown in Fig. 20(B).

In Fig. 20(B), the oppositional relationship between the primary authentication coil L3 and the secondary authentication coil L4 is as follows.

Specifically, the planar coil 8A of the primary authentication coil L3 and the planar coil 8C of the secondary authentication coil L4 oppose each other. In addition, the planar coil 8B of the primary authentication coil L3 and the planar coil 8A of the secondary authentication coil L4 oppose each other. Furthermore, the planar coil 8C of the primary authentication coil L3 and the planar coil 8D of the secondary authentication coil L4 oppose each other. Moreover, the planar coil 8D of the primary authentication coil L3 and the planar coil 8B of the secondary authentication coil L4 oppose each other.

In the oppositional relationship described above, only the planar coils 8A to 8D of the secondary authentication coil L4 which oppose the respective planar coils 8A to 8D of the primary authentication coil L3 are changed and oppositional states of the respective windings 3 of the planar coils 8A to 8D are unchanged from a state in which the secondary authentication coil L4 is not rotated.

Therefore, even if a gap G is formed between the secondary authentication coil L4 and the primary authentication coil L3 in a state in which the secondary authentication coil L4 is rotated clockwise by 90 degrees around its central axis, the strength of the magnetic coupling between the primary authentication coil L3 and the secondary authentication coil L4 remains unchanged from a strength in a state in which a gap G is formed between the secondary authentication coil L4 and the primary authentication coil L3 in a state in which the secondary authentication coil L4 is not rotated.

As a result, even if the charged device 2 is set to the charger 1 in a state in which the secondary authentication coil L4 is rotated clockwise by 90 degrees around its central axis, a charging efficiency of the charged device 2 is not reduced since the strength of the magnetic coupling does not becomes weaker.

The primary authentication coil L3 and the secondary authentication coil L4 shown in Fig. 21 are constituted by nine planar coils 9A to 9I. Even with the primary authentication coil L3 and the secondary authentication coil L4 of this type, winding directions of windings of the planar coils 9A, 9E, and 9I and the planar coils 9C, 9E, and 9G which are respectively aligned on diagonal lines are set the same. In addition, windings of any two planar coils that are vertically and horizontally adjacent to each other have different winding directions.

Even with this configuration, for example, when the secondary authentication coil L4 opposes the primary authentication coil L3 while being rotated clockwise by 90 degrees, only the planar coils 9A to 9I of the secondary authentication coil L4 which oppose the respective planar coils 9A to 9I of the primary authentication coil L3 are changed and oppositional states of the respective windings 3 of the planar coils 9A to 9I are unchanged from a state in which the secondary authentication coil L4 is not rotated.

Therefore, even if a gap G is formed between the secondary authentication coil L4 and the primary authentication coil L3 in a state in which the secondary authentication coil L4 is rotated clockwise by 90 degrees around its central axis, the strength of the magnetic coupling between the primary authentication coil L3 and the secondary authentication coil L4 remains unchanged from a strength in a state in which a gap G is formed between the secondary authentication coil L4 and the primary authentication coil L3 in a state in which the secondary authentication coil L4 is not rotated.

As a result, even if the charged device 2 is set to the charger 1 in a state in which the secondary authentication coil L4 is rotated clockwise by 90 degrees around its central axis, a charging efficiency of the charged device 2 is not reduced since the strength of the magnetic coupling does not becomes weaker.

Moreover, in the description provided above, the numbers of the plurality of planar coils respectively constituting the primary authentication coil L3 and the secondary authentication coil L4 are not limited to those described above.

The present invention will be summarized below. A noncontact charger system according to an aspect of the present invention comprises: a charger including a power transmitting planar coil that transmits high-frequency charging power; and a charged device including a power receiving planar coil which is magnetically coupled to the power transmitting planar coil to receive the high-frequency charging power in a state in which the power receiving planar coil opposes the power transmitting planar coil to form a predetermined gap, wherein the charger includes a primary authentication planar coil which transmits high-frequency authenticating power for authenticating the charged device and which receives a high-frequency authenticating signal for authenticating the charged device, the charged device includes a secondary authentication planar coil which is magnetically coupled to the primary authentication planar coil to receive the high-frequency authenticating power and output the high-frequency authenticating signal generated from the high-frequency authenticating power, to the primary authentication planar coil, and a space between the power transmitting planar coil and the power receiving planar coil overlaps with a space between the primary authentication planar coil and the secondary authentication planar coil.

According to this configuration, in a state in which a power transmitting planar coil and a power receiving planar coil oppose each other to form a predetermined gap, detection of a presence of a foreign object such as metal in the gap can be realized at low cost.

A noncontact charger system according to another aspect of the present invention comprises: a charger including a power transmitting coil which is constituted by a planer coil and which transmits high-frequency charging power for charging a charged device; and a charged device including a power receiving coil which is constituted by a planer coil and which is magnetically coupled to the power transmitting coil to receive the high-frequency charging power in a state in which the power receiving coil opposes the power transmitting coil to form a predetermined gap, wherein the charger includes a primary authentication coil which is constituted by a planar coil that is provided parallel to a plane forming the gap among the power transmitting coil and that has windings arranged over an entire region in which the power transmitting coil and the power receiving coil oppose each other among the plane, and which transmits high-frequency authenticating power for authenticating the charged device and receives a high-frequency authenticating signal for authenticating the charged device, and the charged device includes a secondary authentication coil which is constituted by a planar coil that is provided parallel to a plane forming the gap among the power receiving coil and that has windings arranged over an entire region in which the power transmitting coil and the power receiving coil oppose each other among the plane, and which is magnetically coupled to the primary authentication planar coil to receive the high-frequency authenticating power and output the high-frequency authenticating signal generated from the high-frequency authenticating power, to the primary authentication coil.

According to this configuration, in a state in which a power transmitting coil constituted by a planar coil and a power receiving coil constituted by a planar coil oppose each other to form a predetermined gap, the following processes are performed.

Specifically, high-frequency authenticating power is transmitted from a primary authentication coil to a secondary authentication coil. A high-frequency authenticating signal generated from the high-frequency authenticating power is outputted from the secondary authentication coil to the primary authentication coil. The primary authentication coil is constituted by a planar coil which is provided parallel to a plane forming the gap among the power transmitting coil and which has windings arranged over an entire region in which the power transmitting coil and the power receiving coil oppose each other among the plane. The secondary authentication coil is constituted by a planar coil which is provided parallel to a plane forming the gap among the power receiving coil and which has windings arranged over an entire region in which the power transmitting coil and the power receiving coil oppose each other among the plane.

Assuming that a foreign object such as metal is present in the gap formed by the power transmitting coil and the power receiving coil, the foreign object has the following effects.

As described above, the primary authentication coil is constituted by a planar coil which is provided parallel to a plane forming the gap among the power transmitting coil and which has windings arranged over an entire region in which the power transmitting coil and the power receiving coil oppose each other among the plane. The secondary authentication coil is constituted by a planar coil which is provided parallel to a plane forming the gap among the power receiving coil and which has windings arranged over an entire region in which the power transmitting coil and the power receiving coil oppose each other among the plane.

Therefore, when a foreign object is present in the gap formed by the power transmitting coil and the power receiving coil, the foreign object is inevitably present between the primary authentication coil and the secondary authentication coil. In this case, the foreign object weakens a magnetic coupling between the primary authentication coil and the secondary authentication coil.

As a result, an amplitude of a voltage value at the primary authentication coil is less likely to be influenced by an impedance of the secondary authentication coil and therefore increases. Since a foreign object can be detected by simply detecting such a change in the amplitude of the voltage value, an expensive component such as a microcomputer that performs control in accordance with a control program is not required.

Accordingly, in a state in which the power transmitting coil and the power receiving coil oppose each other and form a predetermined gap, a presence of a foreign object such as metal in the gap can be readily detected without using an expensive component such as a microcomputer. As a result, a low-cost noncontact charger system can be provided.

In the configuration described above, in the primary authentication coil and the secondary authentication coil, windings which are wound with a smaller number of turns than the turns of respective windings of the power transmitting coil and the power receiving coil and which are wound at uniform winding intervals are arranged over the entire region.

Diameters of the respective windings of the primary authentication coil and the secondary authentication coil are set narrower than diameters of the respective windings of the power transmitting coil and the power receiving coil. This is to prevent respective windings of the primary authentication coil and the secondary authentication coil from interlinking with and being heated by a magnetic flux generated in a gap which is formed by the power transmitting coil and the power receiving coil.

As a result, when the respective numbers of turns of the primary authentication coil and the secondary authentication coil are not smaller than the respective numbers of turns of the power transmitting coil and the power receiving coil, respective inductances of the primary authentication coil and the secondary authentication coil cannot be lowered below respective inductances of the power transmitting coil and the power receiving coil.

In addition, the primary authentication coil and the secondary authentication coil are each combined with a corresponding capacitor to constitute an LC resonant circuit having a resonance frequency of several MHz. The LC resonant circuit increases the amplitude of high-frequency authenticating power. The power transmitting coil and the power receiving coil are each combined with a corresponding capacitor to constitute an LC resonant circuit having a resonance frequency of around 100 kHz. The LC resonant circuit increases the amplitude of high-frequency charging power.

Due to such circumstances, since the LC resonant circuits respectively comprising the power transmitting coil and the power receiving coil need only have a resonance frequency of around 100 kHz, the power transmitting coil and the power receiving coil may respectively have somewhat large inductances. However, since the LC resonant circuits respectively comprising the primary authentication coil and the secondary authentication coil need to have a resonance frequency of several MHz, the respective inductances of the primary authentication coil and the secondary authentication coil must be smaller than the inductances of the power transmitting coil and the power receiving coil.

Assuming that the respective inductances of the primary authentication coil and the secondary authentication coil are equal to or greater than the respective inductances of the power transmitting coil and the power receiving coil which have somewhat large values, electrostatic capacities of corresponding capacitors must be set to around several pF in order to set the resonance frequencies of the LC resonant circuits respectively comprising the primary authentication coil and the secondary authentication coil to several MHz.

Capacitors with such electrostatic capacities are rarely seen in markets and therefore significantly increase cost. In addition, since an electrostatic capacity of several pF is comparable to a stray capacitance of respective windings of the primary authentication coil and the secondary authentication coil, the stray capacitance must also be figured in when determining the resonance frequencies of the LC resonant circuits. However, a measurement of a stray capacitance is generally difficult. As a result, designing an LC resonant circuit also becomes difficult.

According to this configuration, since the numbers of turns of the respective windings of the primary authentication coil and the secondary authentication coil are smaller than the numbers of turns of the respective windings of turns of the power transmitting coil and the power receiving coil, respective inductances of the primary authentication coil and the secondary authentication coil can be lowered below respective inductances of the power transmitting coil and the power receiving coil.

Consequently, since a capacitor with a somewhat large electrostatic capacity can be used in a LC resonant circuit, a significant rise in cost can be prevented and, at the same time, a LC resonant circuit can be designed with greater ease.

Furthermore, according to this configuration, respective windings of the primary authentication coil and the secondary authentication coil are wound at uniform winding intervals over an entire region in which the power transmitting coil and the power receiving coil oppose each other. Therefore, regardless of where a foreign object that is present in the gap formed by the power transmitting coil and the power receiving coil is positioned in respective outward ranges from central sides of the primary authentication coil and the secondary authentication coil, the foreign object affects the magnetic coupling between the primary authentication coil and the secondary authentication coil. Consequently, a detection accuracy of a foreign object that is present in the gap is improved.

As described above, according to this configuration, LC resonant circuits which respectively include the primary authentication coil and the secondary authentication coil and which increase the amplitude of high-frequency authenticating power can be designed with greater ease and can also be manufactured at low cost. Furthermore, a detection accuracy of a foreign object that is present in a gap formed by the power transmitting coil and the power receiving coil is improved.

In the configuration described above, in the primary authentication coil and the secondary authentication coil, windings are arranged which have winding intervals that become smaller outward from centers of planes of the authentication coils over the entire region.

Since the closer a position of a foreign object is to respective outer edge portions of the primary authentication coil and the secondary authentication coil, the less likely the respective inductances of the primary authentication coil and the secondary authentication coil change, the magnetic coupling between the primary authentication coil and the secondary authentication coil is less likely to be affected by the foreign object.

According to this configuration, since the winding intervals become smaller outward from the respective centers of the primary authentication coil and the secondary authentication coil, respective inductances of the primary authentication coil and the secondary authentication coil are more liable to change due to a foreign object positioned near the respective outer edge portions of the primary authentication coil and the secondary authentication coil.

As a result, a foreign object positioned near the respective outer edge portions of the primary authentication coil and the secondary authentication coil can be detected with high accuracy.

In the configuration described above, in the primary authentication coil and the secondary authentication coil, windings are arranged which have winding intervals that become smaller toward the centers of planes of the authentication coils as well as outward over the entire region.

When respectively manufacturing the primary authentication coil and the secondary authentication coil, if the windings are wound around bobbins, central portions of the bobbins become voids. As a result, when a foreign object is positioned near a central portion, since respective inductances of the primary authentication coil and the secondary authentication coil are less liable to change, it is difficult to detect a foreign object positioned near a central portion.

According to this configuration, since the winding intervals become smaller the further toward the respective centers of the primary authentication coil and the secondary authentication coil, respective inductances of the primary authentication coil and the secondary authentication coil are more liable to change due to a foreign object positioned near respective central portions of the primary authentication coil and the secondary authentication coil.

As a result, when the windings of the primary authentication coil and the secondary authentication coil have voids at their central portions, a foreign object positioned near the central portions can be detected with high accuracy.

Furthermore, according to this configuration, the winding intervals also become smaller outward respectively in the primary authentication coil and the secondary authentication coil. As a result, when a foreign object is positioned near the respective outer edge portions of the primary authentication coil and the secondary authentication coil, the foreign object can be detected with high accuracy. The reason therefor is as described earlier.

In the configuration described above, the primary authentication coil and the secondary authentication coil are constituted by planar coils with a same surface area and a same shape.

According to this configuration, the primary authentication coil and the secondary authentication coil have a same surface area and a same shape. Therefore, a presence of a foreign object in a space from either of the primary authentication coil and the secondary authentication coil to the other authentication coil in a state in which the primary authentication coil and the secondary authentication coil oppose each other means that the foreign object is inevitably present in a gap between the primary authentication coil and the secondary authentication coil. As a result, the foreign object is present within a magnetic flux between the primary authentication coil and the secondary authentication coil.

Consequently, the presence of a foreign object in a space from either of the primary authentication coil and the secondary authentication coil to the other authentication coil in a state in which the primary authentication coil and the secondary authentication coil oppose each other affects the magnetic coupling between the primary authentication coil and the secondary authentication coil. Therefore, a foreign object that is present between the primary authentication coil and the secondary authentication coil can be detected with high accuracy.

In the configuration described above, the primary authentication coil is constituted by a planar coil which has a same shape as a planar coil constituting the secondary authentication coil but has a larger surface area than the planar coil.

According to this configuration, since the primary authentication coil has the same shape as the secondary authentication coil but has a larger surface area than the surface area of the secondary authentication coil, even if a central axis of the secondary authentication coil is slightly offset from a central axis of the primary authentication coil, the primary authentication coil and the secondary authentication are able to magnetically couple with each other. Consequently, even if the central axis of the secondary authentication coil is slightly offset from the central axis of the primary authentication coil, a foreign object that is present between the power transmitting coil and the power receiving coil can be detected with high accuracy.

In the configuration described above, respective central axes of the primary authentication coil and the secondary authentication coil do not coincide with respective central axes of the power transmitting coil and the power receiving coil.

If central axes of two coils coincide with each other, a mutual induction is more likely to occur between these coils. If central axes of two coils do not coincide with each other, a mutual induction is less likely to occur between these coils.

According to this configuration, since the respective central axes of the primary authentication coil and the secondary authentication coil do not coincide with the respective central axes of the power transmitting coil and the power receiving coil, mutual induction is less likely to occur between the primary authentication coil and each of the power transmitting coil and the power receiving coil.

Therefore, when high-frequency authenticating power is generated at the primary authentication coil, the high-frequency authenticating power is more easily transmitted to the secondary authentication coil without being transmitted to either of the power transmitting coil and the power receiving coil. As a result, an authentication accuracy of a charged device and a foreign object detection accuracy are improved.

In the configuration described above, the primary authentication coil and the secondary authentication coil are each constituted by a square planar coil.

When chassis of the charger 1 and the charged device 2 are square, respective planar coils of the primary authentication coil and the secondary authentication coil are arranged so that surface areas thereof approximate surface areas of planar coils that respectively constitute the power transmitting coil and the power receiving coil. In this case, the respective planar coils of the primary authentication coil and the secondary authentication coil have larger surface areas in a mode in which the planar coils have square shapes as compared to a mode in which the planar coils have circular shapes. As a result, since surface areas of the respective planar coils of the primary authentication coil and the secondary authentication coil are greater when the planar coils have square shapes compared to a case in which the planar coils have circular shapes, a range in which a magnetic flux is generated increases.

According to this configuration, since the primary authentication coil and the secondary authentication coil are each constituted by a square planar coil, a range in which a magnetic flux is generated between the primary authentication coil and the secondary authentication coil increases. Consequently, since a range in which the magnetic coupling between the primary authentication coil and the secondary authentication coil is created becomes wider, a detection accuracy of a foreign object is improved.

In the configuration described above, the primary authentication coil and the secondary authentication coil are each constituted by a plurality of planar coils with a same winding direction, and each of the plurality of planar coils of the secondary authentication coil is provided at a position corresponding to each of the plurality of planar coils of the primary authentication coil.

According to this configuration, since the windings of the plurality of planar coils respectively constituting the primary authentication coil and the secondary authentication coil are arranged in a same winding direction, magnetic fluxes are respectively generated at the primary authentication coil and the secondary authentication coil in a same direction.

In addition, since each of the plurality of planar coils of the secondary authentication coil is provided at a position corresponding to each of the plurality of planar coils of the primary authentication coil, each of the plurality of planar coils of the primary authentication coil is magnetically coupled with the corresponding planar coil of the secondary authentication coil.

Therefore, in a space between the primary authentication coil and the secondary authentication coil, a space with a high magnetic flux density is widely distributed in correspondence with the number of the respective planar coils of the primary authentication coil and the secondary authentication coil.

If a space with a high magnetic flux density is widely distributed in the space between the primary authentication coil and the secondary authentication coil, a foreign object that is present in the space is more likely to affect the magnetic coupling between the primary authentication coil and the secondary authentication coil.

As a result, a space in which a foreign object can be detected with high accuracy becomes widely distributed in the space between the primary authentication coil and the secondary authentication coil, and a detection accuracy of a foreign object that is present in the space between the primary authentication coil and the secondary authentication coil is improved.

In the configuration described above, respective central axes of the plurality of planar coils respectively constituting the primary authentication coil and the secondary authentication coil do not coincide with respective central axes of the power transmitting coil and the power receiving coil.

According to this configuration, the central axes of the plurality of planar coils respectively constituting the primary authentication coil and the secondary authentication coil do not coincide with respective central axes of the power transmitting coil and the power receiving coil. Therefore, a strength of a magnetic coupling between a planar coil of the primary authentication coil and a corresponding planar coil of the secondary authentication coil is less likely to be affected by a magnetic flux between the power transmitting coil and the power receiving coil. As a result, an authentication accuracy of a charged device and a foreign object detection accuracy are improved.

In the configuration described above, in correspondence with each of the plurality of planar coils constituting the primary authentication coil, a high-frequency authenticating power generating units are provided which authenticate the charged device based on the high-frequency authenticating signal received at each of the planar coils, and in correspondence with each of the plurality of planar coils constituting the secondary authentication coil, a high-frequency authenticating signal generating units are provided which generate the high-frequency authenticating signal from the high-frequency authenticating power.

According to this configuration, a high-frequency authenticating power generating units that authenticate a charged device are provided in correspondence with each of the plurality of planar coils of the primary authentication coil. A high-frequency authenticating signal generating units that generate a high-frequency authenticating signal are provided in correspondence with each of the plurality of planar coils of the secondary authentication coil.

As a result, authentication of a charged device and detection of a foreign object are performed for each combination of the plurality of planar coils of the primary authentication coil and the corresponding plurality of planar coils of the secondary authentication coil. Accordingly, an authentication accuracy of a charged device and a foreign object detection accuracy are improved.

In the configuration described above, the primary authentication coil and the secondary authentication coil are each constituted by connecting each of the plurality of planar coils in series.

According to this configuration, since each of the plurality of the planar coils is connected in series to respectively constitute the primary authentication coil and the secondary authentication coil, overall numbers of turns of the respective windings of the primary authentication coil and the secondary authentication coil increase. As a result, respective overall inductances of the primary authentication coil and the secondary authentication coil are improved. Consequently, since the magnetic coupling between the primary authentication coil and the secondary authentication coil becomes stronger, an authentication accuracy of a charged device and a detection accuracy of a foreign object are improved.

In addition, since each of the plurality of planar coils is connected in series, only one circuit needs to be respectively connected to the entire primary authentication coil and the entire secondary authentication coil. Accordingly, cost reduction can be achieved.

In the configuration described above, the primary authentication coil and the secondary authentication coil are each constituted by connecting each of the plurality of planar coils in parallel.

According to this configuration, since each of the plurality of the planar coils is connected in parallel to respectively constitute the primary authentication coil and the secondary authentication coil, only one circuit needs to be respectively connected to the entire primary authentication coil and the entire secondary authentication coil. Accordingly, cost reduction can be achieved.

In the configuration described above, each of the plurality of planar coils is constituted by a square planar coil.

Gaps are created when a plurality of circular planar coils is clustered on a plane.

According to this configuration, since each of the plurality of planar coils is constituted by a square planar coil, gaps are not created even when the planar coils are clustered on a plane. Accordingly, an authentication accuracy of a charged device and a foreign object detection accuracy are improved.

In the configuration described above, the primary authentication coil and the secondary authentication coil respectively include the plurality of planar coils and windings which enclose the plurality of planar coils and which have a same winding direction as that of each of the plurality of planar coils.

A magnetic flux from a planar coil with a large surface area extends to a position further away from the planar coil as compared to a magnetic flux from a planar coil with a small surface area.

According to this configuration, since the windings which enclose the plurality of planar coils and which are wound in a same winding direction as that of each of the plurality of planar coils are provided, a magnetic flux from the windings that enclose the plurality of planar coils reaches positions not reached by the magnetic fluxes of the plurality of planar coils.

As a result, since the magnetic coupling between the primary authentication coil and the secondary authentication coil becomes stronger, an authentication accuracy of a charged device and a detection accuracy of a foreign object are improved.

In the configuration described above, the primary authentication coil and the secondary authentication coil are each constituted by two planar coils which have winding directions that differ from each other and which have central axes that do not coincide with respective central axes of the power transmitting coil and the power receiving coil, and each of the two planar coils of the secondary authentication coil is provided at a position corresponding to each of the two planar coils of the primary authentication coil.

According to this configuration, the winding directions of windings of the two planar coils respectively constituting the primary authentication coil and the secondary authentication coil differ from each other. Therefore, a magnetic flux loop is formed from the planar coil of the primary authentication coil and reaching the corresponding planar coil of the secondary authentication coil, and from the other planar coil of the secondary authentication coil and reaching the corresponding planar coil of the primary authentication coil.

In addition, the respective central axes of the two planar coils in the primary authentication coil and the secondary authentication coil do not coincide with the respective central axes of the power transmitting coil and the power receiving coil. Therefore, the magnetic flux loop between the primary authentication coil and the secondary authentication coil does not pass through a path of a magnetic flux with a high magnetic flux density from the power transmitting coil to the power receiving coil along the central axes of the power transmitting coil and the power receiving coil.

Accordingly, since the magnetic flux between the primary authentication coil and the secondary authentication coil is less likely to be interfered by the magnetic flux between the power transmitting coil and the power receiving coil, a magnetic coupling between the primary authentication coil and the secondary authentication coil is less likely to be affected by the power transmitting coil and the power receiving coil. As a result, an authentication accuracy of a charged device and a foreign object detection accuracy can be improved.

In the configuration described above, a space between the power transmitting coil and the power receiving coil is a space having one side defined by the power transmitting coil and another side defined by the power receiving coil, wherein the one side and the other side have a same surface area, and the entire primary authentication coil opposes the entire one side while the entire secondary authentication coil opposes the entire other side.

According to this configuration, only a foreign object positioned in the space between the power transmitting coil and the power receiving coil can be detected without detecting a foreign object positioned outside the space.

In the configuration described above, the primary authentication coil is positioned opposite to a side on which the power transmitting coil opposes the power receiving coil, and the secondary authentication coil is positioned opposite to a side on which the power receiving coil opposes the power transmitting coil.

According to this configuration, the primary authentication coil is on an outer side of the power transmitting coil and the secondary authentication coil is on an outer side of the power receiving coil. Therefore, since the power transmitting coil and the power receiving coil are positioned between the primary authentication coil and the secondary authentication coil, charging can be performed by bringing the power transmitting coil and the power receiving coil close to each other. Consequently, since a magnetic coupling between the power transmitting coil and the power receiving coil does not becomes weaker, charging can be performed in an efficient manner.

In the configuration described above, the primary authentication coil is provided on a same plane as the power transmitting coil and the secondary authentication coil is provided on a same plane as the power receiving coil.

According to this configuration, since the number of coil layers can be reduced, thickness of the charger and the charged device can be reduced.

## Claims

1. A noncontact charger system comprising:
a charger (1) which has a power transmitting unit (11) including a power transmitting planar coil (L1) that transmits high-frequency charging power; and
a charged device (2) which has a power receiving unit (21) including a power receiving planar coil (L2) which is magnetically coupled to the power transmitting planar coil (L1) to receive the high-frequency charging power in a state in which the power receiving planar coil (L2) opposes the power transmitting planar coil (L1) to form a predetermined gap (G); and
a control unit (10), **characterised in that** the charger (1) further has a high-frequency authenticating power generating unit (13) including a primary authentication planar coil (L3), the high-frequency authenticating power generating unit (13) generates high-frequency authenticating power for authenticating the charged device (2), the primary authentication planar coil (L3) transmits the high-frequency authenticating power to the charged device (2) and receives a high-frequency authenticating signal for authenticating the charged device (2),
the charged device (2) further has a high-frequency authenticating signal generating unit (23) including a secondary authentication planar coil (L4) which is magnetically coupled to the primary authentication planar coil (L3) to receive the high-frequency authenticating power, the high-frequency authenticating signal generating unit (23) further includes a power circuit (24) which generates drive power for generating the high-frequency authenticating signal from the high-frequency authenticating power, the secondary authentication planar coil (L4) outputs the high-frequency authenticating signal to the primary authentication planar coil (L3),
the control unit (10) is configured to detect a presence of a foreign object in the gap (G) by detecting a change in an amplitude of a voltage value at the primary authentication planar coil (L3), and
a space (31) between the power transmitting planar coil (L1) and the power receiving planar coil (L2) overlaps with a space between the primary authentication planar coil (L3) and the secondary authentication planar coil (L4).

2. The noncontact charger system according to claim 1, wherein
in the primary authentication planar coil (L3) and the secondary authentication planar coil (L4), there are arranged windings which are wound with a smaller number of turns than the turns of respective windings of the power transmitting planar coil (L1) and the power receiving planar coil (L2) and which are wound at uniform winding intervals.

3. The noncontact charger system according to claim 1, wherein
in the primary authentication planar coil (L3) and the secondary authentication planar coil (L4), there are arranged windings which have winding intervals that become smaller outward from centers of the planar coils.

4. The noncontact charger system according to claim 1, wherein
in the primary authentication planar coil (L3) and the secondary authentication planar coil (L4), there are arranged windings which have winding intervals that become smaller toward centers of the planar coils as well as outward.

5. The noncontact charger system according to any one of claims 1 to 4, wherein
the primary authentication planar coil (L3) and the secondary authentication planar coil (L4) have a same surface area and a same shape.

6. The noncontact charger system according to any one of claims 1 to 4, wherein
the primary authentication planar coil (L3) has a same shape as the secondary authentication planar coil (L4) but has a larger surface area than the secondary authentication planar coil (L4).

7. The noncontact charger system according to claim 1, wherein
respective central axes of the primary authentication planar coil (L3) and the secondary authentication planar coil (L4) do not coincide with respective central axes of the power transmitting planar coil (L1) and the power receiving planar coil (L2).

8. The noncontact charger system according to any one of claims 1 to 7, wherein
the primary authentication planar coil (L3) and the secondary authentication planar coil (L4) are each constituted by a square planar coil.

9. The noncontact charger system according to claim 1, wherein
the primary authentication planar coil (L3) and the secondary authentication planar coil (L4) are each constituted by a plurality of planar coils with a same winding direction, and
each of the plurality of planar coils of the secondary authentication planar coil (L4) is provided at a position corresponding to each of the plurality of planar coils of the primary authentication planar coil (L3).

10. The noncontact charger system according to claim 9, wherein
respective central axes of the plurality of planar coils respectively constituting the primary authentication planar coil (L3) and the secondary authentication planar coil (L4) do not coincide with respective central axes of the power transmitting planar coil (L1) and the power receiving planar coil (L2).

11. The noncontact charger system according to claim 9 or 10, wherein
the high-frequency authenticating power generating unit (13) authenticates, in correspondence with each of the plurality of planar coils constituting the primary authentication planar coil (L3), the charged device based on the high-frequency authenticating signal received at each of the planar coils; and
the high-frequency authenticating signal generating unit (23) generates, in correspondence with each of the plurality of planar coils constituting the secondary authentication coil (L4), the high-frequency authenticating signal from the high-frequency authenticating power.

12. The noncontact charger system according to claim 9 or 10, wherein
the primary authentication planar coil (L3) and the secondary authentication planar coil (L4) are each constituted by connecting each of the plurality of planar coils in series.

13. The noncontact charger system according to claim 9 or 10, wherein
the primary authentication planar coil (L3) and the secondary authentication planar coil (L4) are each constituted by connecting each of the plurality of planar coils in parallel.

14. The noncontact charger system according to claim 9 or 10, wherein
each of the plurality of planar coils is constituted by a square planar coil.

15. The noncontact charger system according to claim 9 or 10, wherein
the primary authentication planar coil (L3) and the secondary authentication planar coil (L4) respectively include:
the plurality of planar coils; and
windings which enclose the plurality of planar coils and which have a same winding direction as that of each of the plurality of planar coils.

16. The noncontact charger system according to claim 1, wherein
the primary authentication planar coil (L3) and the secondary authentication planar coil (L4) are each constituted by two planar coils which have winding directions that differ from each other and which have central axes that do not coincide with respective central axes of the power transmitting planar coil (L1) and the power receiving planar coil (L2), and
each of the two planar coils of the secondary authentication planar coil (L4) is provided at a position corresponding to each of the two planar coils of the primary authentication planar coil (L3).

## Patentansprüche

1. Ein kontaktfreies Ladesystem, das Folgendes umfasst:
eine Ladeeinrichtung (1), die eine Energie übertragende Einheit (11) aufweist, die eine Energie übertragende planare Spule (L1) beinhaltet, die hochfrequente Ladeenergie überträgt; und
eine geladene Vorrichtung (2), die eine Energie empfangende Einheit (21) aufweist, die eine Energie empfangende planare Spule (L2) beinhaltet, die mit der Energie übertragenden planaren Spule (L1) magnetisch gekoppelt ist, um die hochfrequente Ladeenergie in einem Zustand zu empfangen, in dem die Energie empfangende planare Spule (L2) der Energie übertragenden planaren Spule (L1) zur Bildung eines vorbestimmten Zwischenraums (G) gegenüberliegt; und
eine Steuereinheit (10),
**dadurch gekennzeichnet, dass**
die Ladeeinrichtung (1) des Weiteren eine hochfrequente, authentifizierende Energie erzeugende Einheit (13) aufweist, die eine primäre, planare Authentifizierungsspule (L3) beinhaltet, dass die hochfrequente, authentifizierende Energie erzeugende Einheit (13) eine hochfrequente authentifizierende Energie zur Authentifizierung der geladenen Vorrichtung (2) erzeugt, dass die primäre, planare Authentifizierungsspule (L3) die hochfrequente authentifizierende Energie zur geladenen Vorrichtung (2) überträgt und zur Authentifizierung der geladenen Vorrichtung (2) ein hochfrequentes authentifizierendes Signal empfängt,
die geladene Vorrichtung (2) des Weiteren eine Einheit (23) zur Erzeugung eines hochfrequenten, authentifizierenden Signals aufweist, die eine sekundäre planare Authentifizierungsspule (L4) beinhaltet, die mit der primären, planaren Authentifizierungsspule (L3) magnetisch gekoppelt ist, um die hochfrequente authentifizierende Energie zu empfangen, dass die Einheit (23) zur Erzeugung eines hochfrequenten, authentifizierenden Signals des Weiteren einen Versorgungsschaltkreis *(power circuit)* (24) beinhaltet, der eine Antriebsenergie zur Erzeugung des hochfrequenten, authentifizierenden Signals aus der hochfrequenten authentifizierenden Energie erzeugt, dass die sekundäre planare Authentifizierungsspule (L4) das hochfrequente authentifizierende Signal an die primäre, planare Authentifizierungsspule (L3) ausgibt,
die Steuereinheit (10) konfiguriert ist, um durch die Feststellung einer Amplitudenänderung eines Spannungswertes an der primären, planaren Authentifizierungsspule (L3) die Anwesenheit eines Fremdkörpers im Zwischenraum (G) festzustellen, und
ein Raum (31) zwischen der Energie übertragenden planaren Spule (L1) und der Energie empfangenden planaren Spule (L2) sich mit einem Raum zwischen der primären, planaren Authentifizierungsspule (L3) und der sekundären planaren Authentifizierungsspule (L4) überlappt.

2. Das kontaktfreie Ladesystem nach Anspruch 1, wobei
in der primären, planaren Authentifizierungsspule (L3) und der sekundären planaren Authentifizierungsspule (L4) Wicklungen angeordnet sind, die mit einer geringeren Anzahl an Windungen gewickelt sind als die Anzahl der entsprechenden Windungen der Energie übertragenden planaren Spule (L1) und der Energie empfangenden planaren Spule (L2), und die in gleichmäßigen Windungs-Intervallen gewickelt sind.

3. Das kontaktfreie Ladesystem nach Anspruch 1, wobei
in der primären, planaren Authentifizierungsspule (L3) und der sekundären planaren Authentifizierungsspule (L4) Wicklungen angeordnet sind, die Windungs-Intervalle aufweisen, die, ausgehend von den Zentren der planaren Spulen, nach außen hin kleiner werden.

4. Das kontaktfreie Ladesystem nach Anspruch 1, wobei
in der primären, planaren Authentifizierungsspule (L3) und der sekundären planaren Authentifizierungsspule (L4) Wicklungen angeordnet sind, die Windungs-Intervalle aufweisen, die zu den Zentren der planaren Spulen hin und nach außen hin kleiner werden.

5. Das kontaktfreie Ladesystem nach irgendeinem der Ansprüche 1 bis 4, wobei
die primäre, planare Authentifizierungsspule (L3) und die sekundäre planare Authentifizierungsspule (L4) eine gleiche Grundfläche und eine gleiche Form aufweisen.

6. Das kontaktfreie Ladesystem nach irgendeinem der Ansprüche 1 bis 4, wobei
die primäre, planare Authentifizierungsspule (L3) die gleiche Form wie die sekundäre planare Authentifizierungsspule (L4) aber eine größere Grundfläche als die sekundäre planare Authentifizierungsspule (L4) aufweist.

7. Das kontaktfreie Ladesystem nach Anspruch 1, wobei
entsprechende zentrale Achsen der primären, planaren Authentifizierungsspule (L3) und der sekundären planaren Authentifizierungsspule (L4) mit entsprechenden zentralen Achsen der Energie übertragenden planaren Spule (L1) und der Energie empfangenden planaren Spule (L2) nicht übereinstimmen.

8. Das kontaktfreie Ladesystem nach irgendeinem der Ansprüche 1 bis 7, wobei
die primäre, planare Authentifizierungsspule (L3) die gleiche Form wie die sekundäre planare Authentifizierungsspule (L4) jeweils aus einer planaren Vierkantspule bestehen.

9. Das kontaktfreie Ladesystem nach Anspruch 1, wobei
die primäre, planare Authentifizierungsspule (L3) die gleiche Form wie die sekundäre planare Authentifizierungsspule (L4) jeweils aus einer Vielzahl an planaren Spulen mit einer gleichen Wickelrichtung bestehen, und wobei
jede aus der Vielzahl an planaren Spulen der sekundären planaren Authentifizierungsspule (L4) an einer Position bereitgestellt wird, die jeder aus der Vielzahl an planaren Spulen der primären planaren Authentifizierungsspule (L3) entspricht.

10. Das kontaktfreie Ladesystem nach Anspruch 9, wobei
entsprechende zentrale Achsen der Vielzahl an planaren Spulen, die die primäre, planare Authentifizierungsspule (L3) und die sekundäre planare Authentifizierungsspule (L4) jeweils bilden, mit entsprechenden zentralen Achsen der Energie übertragenden planaren Spule (L1) und der Energie empfangenden planaren Spule (L2) nicht übereinstimmen.

11. Das kontaktfreie Ladesystem nach Anspruch 9 oder 10, wobei
die hochfrequente, authentifizierende Energie erzeugende Einheit (13) in Verbindung mit jeder aus der Vielzahl an planaren Spulen, die die primäre planare Authentifizierungsspule (L3) bilden, die geladene Vorrichtung aufgrund des hochfrequenten authentifizierenden Signals, das bei jeder der planaren Spulen empfangen wird, authentifiziert; und wobei
die Einheit (23) zur Erzeugung eines hochfrequenten, authentifizierenden Signals, in Verbindung mit jeder aus der Vielzahl an planaren Spulen, die die sekundäre planare Authentifizierungsspule (L4) bilden, das hochfrequente authentifizierende Signal aus der hochfrequenten authentifizierenden Energie erzeugt.

12. Das kontaktfreie Ladesystem nach Anspruch 9 oder 10, wobei
die primäre, planare Authentifizierungsspule (L3) und die sekundäre planare Authentifizierungsspule (L4) jeweils dadurch gebildet werden, dass jede aus der Vielzahl an planaren Spulen miteinander in Serie geschaltet wird.

13. Das kontaktfreie Ladesystem nach Anspruch 9 oder 10, wobei
die primäre, planare Authentifizierungsspule (L3) und die sekundäre planare Authentifizierungsspule (L4) jeweils dadurch gebildet werden, dass jede aus der Vielzahl an planaren Spulen miteinander parallel geschaltet wird.

14. Das kontaktfreie Ladesystem nach Anspruch 9 oder 10, wobei
jede aus der Vielzahl an planaren Spulen durch eine viereckige planare Spule gebildet wird.

15. Das kontaktfreie Ladesystem nach Anspruch 9 oder 10, wobei
die primäre, planare Authentifizierungsspule (L3) und die sekundäre planare Authentifizierungsspule (L4) jeweils Folgendes beinhalten:
die Vielzahl an planaren Spulen; und
Windungen, die die Vielzahl an planaren Spulen umschließen und die die gleiche Wickelrichtung aufweisen, wie die jeder Spule aus der Vielzahl an planaren Spulen.

16. Das kontaktfreie Ladesystem nach Anspruch 1, wobei
die primäre, planare Authentifizierungsspule (L3) und die sekundäre planare Authentifizierungsspule (L4) jeweils aus zwei planaren Spulen bestehen, die voneinander unterschiedliche Wickelrichtungen aufweisen, und die zentrale Achsen aufweisen, die mit entsprechenden zentralen Achsen der Energie übertragenden planaren Spule (L1) und der Energie empfangenden planaren Spule (L2) nicht übereinstimmen, und wobei
jede der zwei planaren Spulen der sekundären planaren Authentifizierungsspule (L4) an einer Position bereitgestellt wird, die jeder der zwei planaren Spulen der primären planaren Authentifizierungsspule (L3) entspricht.

## Revendications

1. Un système de chargeur sans contact comprenant :
un chargeur (1) qui présente une unité de transmission d'énergie (11) incluant une bobine planaire de transmission d'énergie (L1) qui transmet de l'énergie de charge à haute fréquence, et
un dispositif chargé (2) qui présente une unité de réception d'énergie (21) incluant une bobine planaire de réception d'énergie (L2) qui est magnétiquement couplée avec la bobine planaire de transmission d'énergie (L1) pour recevoir l'énergie de charge à haute fréquence dans un état dans lequel la bobine planaire de réception d'énergie (L2) s'oppose à la bobine planaire de transmission d'énergie (L1) pour former un écart prédéterminé (G) ; et
une unité de commande (10),
**caractérisé en ce que**
le chargeur (1) présente en outre une unité de génération d'énergie d'authentification à haute fréquence (13) incluant une bobine planaire primaire d'authentification (L3), que l'unité de génération d'énergie d'authentification à haute fréquence (13) génère de l'énergie d'authentification à haute fréquence pour authentifier le dispositif chargé (2), que la bobine planaire primaire d'authentification (L3) transmet l'énergie d'authentification à haute fréquence au dispositif chargé (2) et reçoit un signal d'authentification à haute fréquence pour authentifier le dispositif chargé (2),
que le dispositif chargé (2) présente en outre une unité de génération de signal d'authentification à haute fréquence (23) incluant une bobine planaire secondaire d'authentification (L4) magnétiquement couplée avec la bobine planaire primaire d'authentification (L3) pour recevoir l'énergie d'authentification à haute fréquence, que l'unité de génération de signal d'authentification à haute fréquence (23) inclut en outre un circuit d'alimentation (24) qui génère une énergie de commande pour la génération du signal d'authentification à haute fréquence à partir de l'énergie d'authentification à haute fréquence, que la bobine planaire secondaire d'authentification (L4) émet le signal d'authentification à haute fréquence vers la bobine planaire primaire d'authentification (L3),
que l'unité de commande (10) est configurée pour détecter une présence d'un corps étranger dans l'écart (G) en détectant un changement dans l'amplitude d'une valeur de tension auprès de la bobine planaire primaire d'authentification (L3), et que
un espace (31) entre la bobine planaire de transmission d'énergie (L1) et la bobine planaire de réception d'énergie (L2) chevauche un espace entre la bobine planaire primaire d'authentification (L3) et la bobine planaire secondaire d'authentification (L4).

2. Le système de chargeur sans contact d'après la revendication 1, sachant que
dans la bobine planaire primaire d'authentification (L3) et la bobine planaire secondaire d'authentification (L4) sont agencés des enroulements qui sont enroulés avec un plus petit nombre de spires que les spires des enroulements respectifs de la bobine planaire de transmission d'énergie (L1) et de la bobine planaire de réception d'énergie (L2), et qui sont enroulés avec des intervalles d'enroulement uniformes.

3. Le système de chargeur sans contact d'après la revendication 1, sachant que
dans la bobine planaire primaire d'authentification (L3) et la bobine planaire secondaire d'authentification (L4) sont agencés des enroulements qui présentent des intervalles d'enroulement qui deviennent plus petits vers l'extérieur en s'écartant des centres des bobines planaires.

4. Le système de chargeur sans contact d'après la revendication 1, sachant que
dans la bobine planaire primaire d'authentification (L3) et la bobine planaire secondaire d'authentification (L4) sont agencés des enroulements qui présentent des intervalles d'enroulement qui deviennent plus petits vers les centres des bobines planaires ainsi que vers l'extérieur.

5. Le système de chargeur sans contact d'après une quelconque des revendications de 1 à 4, sachant que
la bobine planaire primaire d'authentification (L3) et la bobine planaire secondaire d'authentification (L4) présentent la même superficie et une même forme.

6. Le système de chargeur sans contact d'après une quelconque des revendications de 1 à 4, sachant que
la bobine planaire primaire d'authentification (L3) présente la même forme que la bobine planaire secondaire d'authentification (L4) mais présente une plus grande superficie que la bobine planaire secondaire d'authentification (L4).

7. Le système de chargeur sans contact d'après la revendication 1, sachant que
des axes centraux respectifs de la bobine planaire primaire d'authentification (L3) et de la bobine planaire secondaire d'authentification (L4) ne coïncident pas avec des axes centraux respectifs de la bobine planaire de transmission d'énergie (L1) et de la bobine planaire de réception d'énergie (L2).

8. Le système de chargeur sans contact d'après une quelconque des revendications de 1 à 7, sachant que
la bobine planaire primaire d'authentification (L3) et la bobine planaire secondaire d'authentification (L4) sont constituées d'une bobine planaire de forme carrée.

9. Le système de chargeur sans contact d'après la revendication 1, sachant que
la bobine planaire primaire d'authentification (L3) et la bobine planaire secondaire d'authentification (L4) sont constituées chacune d'une pluralité de bobines planaires présentant la même direction d'enroulement, et que
chacune de la pluralité de bobines planaires de la bobine planaire secondaire d'authentification (L4) est fournie dans une position qui correspond à chacune de la pluralité de bobines planaires de la bobine planaire primaire d'authentification (L3).

10. Le système de chargeur sans contact d'après la revendication 9, sachant que
des axes centraux respectifs de la pluralité de bobines planaires constituant la bobine planaire primaire d'authentification (L3) et la bobine planaire secondaire d'authentification (L4) ne coïncident pas avec des axes centraux respectifs de la bobine planaire de transmission d'énergie (L1) et de la bobine planaire de réception d'énergie (L2).

11. Le système de chargeur sans contact d'après la revendication 9 ou 10, sachant que
l'unité de génération d'énergie d'authentification à haute fréquence (13) authentifie, en correspondance avec chacune de la pluralité de bobines planaires constituant la bobine planaire primaire d'authentification (L3), le dispositif chargé en se basant sur le signal d'authentification à haute fréquence reçu auprès de chacune des bobines planaires ; et que
l'unité de génération de signal d'authentification à haute fréquence (23) génère, en correspondance avec chacune de la pluralité de bobines planaires constituant la bobine planaire secondaire d'authentification (L4), le signal d'authentification à haute fréquence à partir de l'énergie d'authentification à haute fréquence.

12. Le système de chargeur sans contact d'après la revendication 9 ou 10, sachant que
la bobine planaire primaire d'authentification (L3) et la bobine planaire secondaire d'authentification (L4) sont constituées chacune en raccordant chacune parmi la pluralité de bobines planaires en série.

13. Le système de chargeur sans contact d'après la revendication 9 ou 10, sachant que
la bobine planaire primaire d'authentification (L3) et la bobine planaire secondaire d'authentification (L4) sont constituées chacune en raccordant chacune parmi la pluralité de bobines planaires en parallèle.

14. Le système de chargeur sans contact d'après la revendication 9 ou 10, sachant que
chacune parmi la pluralité de bobines planaires est constituée par une bobine planaire de forme carrée.

15. Le système de chargeur sans contact d'après la revendication 9 ou 10, sachant que
la bobine planaire primaire d'authentification (L3) et la bobine planaire secondaire d'authentification (L4) incluent respectivement :
la pluralité de bobines planaires ; et
des enroulements qui renferment la pluralité de bobines planaires et qui présentent la même direction d'enroulement que celle de chacune parmi la pluralité de bobines planaires.

16. Le système de chargeur sans contact d'après la revendication 1, sachant que
la bobine planaire primaire d'authentification (L3) et la bobine planaire secondaire d'authentification (L4) sont constituées chacune de deux bobines planaires qui présentent des directions d'enroulement différentes l'une de l'autre, et qui présentent des axes centraux qui ne coïncident pas avec des axes centraux respectifs de la bobine planaire de transmission d'énergie (L1) et de la bobine planaire de réception d'énergie (L2), et que
chacune des deux bobines planaires de la bobine planaire secondaire d'authentification (L4) est fournie dans une position qui correspond à chacune des deux bobines planaires de la bobine planaire primaire d'authentification (L3).
